# EUROPEAN PATENT SPECIFICATION

(11) **EP 1 200 484 B1**
(45) Date of publication and mention of the grant of the patent: **05.10.2011**
(21) Application number: 00954149.1
(22) Date of filing: 19.06.2000
(51) Int. Cl.: C08G 61/08, B01J 19/00, B01J 31/22, C07F 15/00, C08F 10/00, C08F 2/38, C08F 4/80, B01J 31/16

(54) **METHODS AND REAGENTS MAKING MULTIVALENT ARRAYS AND COMBINATORIAL LIBRARIES OF MULTIVALENT ARRAYS**
VERFAHREN UND REAGENZIEN ZUR HERSTELLUNG MULTIVALENTER STRUKTUREN UND KOMBINATORISCHE BIBLIOTHEKEN MULTIVALENTER STRUKTUREN
PROCEDES ET REACTIFS FORMANT DES JEUX ORDONNES POLYVALENTS ET BIBLIOTHEQUES COMBINATOIRES DE JEUX ORDONNES POLYVALENTS

(30) Priority: 17.06.1999 US 336121; 17.06.1999 US 335430
(43) Date of publication of application: 02.05.2002
(73) Proprietor: WISCONSIN ALUMNI RESEARCH FOUNDATION, Madison, WI 53705-7365 (US)
(72) Inventor: KIESSLING, Laura, L., Madison, WI 53704 (US); GORDON, Eva, J., Wheeling, IL 60090 (US); STRONG, Laura, E., Madison, WI 53704 (US)
(74) Representative: Fisher, Adrian John
(86) International application number: PCT/US2000/040245
(87) International publication number: WO 2000/078821

(56) References cited:
- US-A- 5 880 231
- US-A- 5 880 231
- US-A- 6 080 826
- BARRETT A G M ET AL: "ROMP-SPHERES: A NOVEL HIGH-LOADING POLYMER SUPPORT USING CROSS METATHESIS BETWEEN VINYL POLYSTYRENE AND NORBORNENE DERIVATIVES" ORGANIC LETTERS, AMERICAN CHEMICAL SOCIETY, US, vol. 1, no. 7, 1999, pages 1083-1085, XP001040769 ISSN: 1523-7060
- GORDON, GESTWICKI, STRONG, KIESSLING: "Synthesis of end-labeled multivalent ligands for exploring cell-surface-receptor-ligand interactions" CHEMISTRY AND BIOLOGY, no. 7, 10 December 1999 (1999-12-10), pages 9-16, XP002318565

## Description

### BACKGROUND OF THE INVENTION

New materials and methods of synthesis are emerging as significant areas of research and manufacturing. They have applications in the fields of biotechnology, medicine, pharmaceuticals, medical devices, sensors, optical materials, etc. The ring-opening metathesis polymerization (ROMP) method has emerged as a powerful synthetic method for the creation of such useful materials. Many examples in which ROMP has been used to generate functionalized materials have focused on the incorporation of pendant functionality into the monomers, thereby forming a multivalent array. As used herein, a multivalent array refers to a polymer (including a random or block copolymer) of varying lengths, including shorter oligomers having pendant functional groups that impart various properties to the polymer. Such multivalent arrays are also often referred to as multivalent ligands, multivalent displays, multidentate arrays, multidentate ligands, or multidentate displays.

Such multivalent arrays are particularly useful in the medical and biotechnology areas. For example, the binding of cell surface receptors to particular epitopes of multivalent arrays can trigger a wide variety of biological responses. Such multivalent binding events have unique consequences that are dramatically different than those elicited by monovalent interactions. For instance, signaling through the epidermal growth factor is promoted by the binding of divalent ligands, which apparently promote dimerization of the transmembrane receptor, yet monovalent ligands also bind the receptor but produce no signal. In addition, multivalent arrays have been shown to induce the release of a cell surface protein, suggesting a new mechanism for controlling protein display. In protein-carbohydrate recognition processes, multivalent saccharide-substituted arrays can exhibit increased avidity, specificity, and unique inhibitory potencies under dynamic conditions of shear flow. Thus, the ability to synthesize defined, multivalent arrays of biologically relevant binding epitopes provides a means for exploring and manipulating physiologically significant processes.

Because they can span large distances, linear multivalent arrays of varying length and epitope density are particularly useful for probing structure-function relationships in biological systems. Chemical and chemoenzymatic routes have been developed for the generation of di- and trivalent ligands, dendrimers, and high molecular weight polymers, but well-defined, linear oligomers have proven more difficult to synthesize. Thus, what is needed is a general strategy to create diverse arrays of different multivalent materials of varying and controlled length.

One way in which this could be done is through the use of ROMP technology. ROMP has been used to generate defined, biologically active polymers (Gibson et al., Chem. Commum, 1095-1096 (1997); Biagini et al., Chem. Commun., 1097-1098 (1997); Biagini et al., Polymer, 39, 1007-1014 (1998); and Kiessling et al., Topics in Organometallic Chemistry, 1, 199-231 (1998)) with potent and unique activities that range from inhibiting protein-carbohydrate recognition events to promoting the proteolytic release of cell surface proteins (Mortell et al., J. Am. Chem. Soc., 118, 2297-2298 (1996); Mortell et al., J. Am. Chem. Soc., 116, 12053-12054 (1994); Kanai et al., J. Am. Chem. Soc., 119, 9931-9932 (1997)); Kingsbury et al., J. Am. Chem. Soc.,121, 791-799 (1999); Schrock et al., J. Am. Chem. Soc., 112, 3875-3886 (1990); Gordon et al., Nature, 392, 30-31 (1998); and Sanders et al., J. Biol. Chem., 274, 5271-5278 (1999). The assembly of multivalent materials by ROMP has several advantages over classical methods for generation of multivalent displays. Specifically, ROMP can be performed under living polymerization conditions, and if the rate of initiation is faster than that of propagation, varying the monomer to initiator ratio (M:I) can generate materials of defined length (Ivin, Olefin Metathesis and metathesis polymerization; Academic Press: San Diego, 1997). This approach has been successfully applied with the Grubb's ruthenium metal carbene catalyst ([(Cy)₃P]₂C]₂Ru=CHPh) to generate materials with narrow polydispersities, indicating that the resulting substances are fairly homogeneous (Dias et al., J. Am. Chem. Soc., 119, 3887-3897 (1997); and Lynn et al., J. Am. Chem. Soc., 118, 784-790 (1996)). In contrast to anionic and cationic polymerization catalysts, ruthenium metal carbene initiators are tolerant of a wide range of functional groups.

There are, however, inherent disadvantages in the use of standard approaches that rely on ROMP to assemble biologically active materials. For example, the desired pendant functionality is incorporated into the monomers. Thus, a new functionalized cyclic olefin monomer, typically a functionalized bicyclic monomer, must be synthesized for each new polymer class to be produced. Also, the physical properties of each monomer, such as its solubility and the electron density and strain of the cyclic olefin, result in different rates of initiation, propagation, and non-productive termination of the reaction (Kanai et al., J. Am. Chem. Soc., 119, 9931-9932 (1997)). In addition, purification of the desired products can be complicated depending on the structure of the monomer used.

Expedient, large-scale syntheses of multivalent arrays are hindered by these technical complications. Thus, what is needed is a general method for synthesizing multivalent arrays that addresses one or more of these issues. Ultimately, both large-scale production and the generation of libraries of oligomers would be facilitated by such a method.

An additional strategy for introduction of further modification in multivalent arrays is to incorporate selected functional groups at the termini of ROMP polymers. The attachment of additional functionality at polymer termini further expands the repertoire of uses for materials generated by ROMP. This selective end-capping has been used previously in living titanium and molybdenum-initiated ROMP reactions to synthesize materials for new applications, as demonstrated in the synthesis of surfaces bearing ROMP-derived polymers (Cannizzo et al., Macromolecules, 20, 1488-1490 (1987); Albagli et al., J. Phys. Chem., 97, 10211-10216 (1993); and Albagli et al., J. Am. Chum. Soc., 115, 7328-7334 (1993)). Unlike the titanium and molybdenum initiators, ruthenium ROMP initiators are tolerant of a wide variety of polar functional groups, allowing generation of products not accessible using other catalysts (Grubbs, J.M.S. Pure Appl Chem., A31, 1829 (1994)). The attachment of specific end groups to polymers generated by ruthenium carbene-catalyzed ROMP provides access to materials amenable to further functionalization for applications such as selective immobilization of polymers to create new surfaces (Weck et al., J. Am. Chem. Soc., 121, 4088-4089 (1999)) and the development of specific ligands that report on binding events, for example. Thus, what is needed are methods and reagents for the incorporation of selected functionality into the terminii of polymers generated by ruthenium carbene-catalyzed ROMP.

### SUMMARY OF INVENTION

According to the present invention, there is provided a method of preparing a telechelic polymer, as defined in claim 1.

The present invention thus provides methods which can be used for synthesizing multivalent arrays. Significantly, the methods of the present invention can provide access to a wider range of materials with significant functions. For example, they can be used to generate libraries of oligomeric substances that differ in appended functionality, terminal functionality, as well as in length. Significantly, the methods of the present invention provide the ability to control the number, type and position of pendant functional groups as well as to provide for selected functionality at the polymer ends. Such design control is important for elucidating stucture/function relationships in biological systems, for example. The methods of the present invention can be used to produce random copolymers (i.e., polymers derived from two or more different monomers). In addition, block copolymers can be generated in which some blocks are held invariant while others are diversified through the method of the present invention. The blocks can vary in the backbone and/or the pendant functional groups.

The present invention further relates to methods and reagents for the terminal attachment of functional groups to materials generated by ROMP. These methods and reagents can be used to synthesize a variety of functionalized polymers (herein, included within this term are relatively short oligomers). Significantly, the methods of the present invention can provide access to a wide range of materials with significant functions. For example, they can be used to generate libraries of oligomeric substances that differ in terminal functionality, type and number of functional groups, as well as in length. Such materials can include functionality that allows for immobilization on a substrate surface, for example. Alternatively, such materials can include reporter groups such as functionality capable of fluorescence, which allows for the creation of a molecular probe that can be used to visualize a receptor-ligand interaction on a cell surface. Another advantage of incorporating terminal functionality is that this can allow for easier purification of the polymers. Such diverse materials can be prepared using a capping agent, preferably a bifunctional capping agent, and/or a functionalized metathesis catalyst. Method for introducing terminal functionality can be employed with conventional ROMP polymerization methods or with improved methods disclosed herein for synthesis of functionalized polymers from polymer templates.

The method of the present invention includes: polymerizing at least one monomer comprising at least one polymerizable group in the presence of at least one ruthenium or osmium carbene catalyst to form a polymer; and combining the polymer with at least one functionalized capping agent under conditions effective to react the polymer with the capping agent to form a terminally functionalized polymer.

The functionalized capping agent can include a latent reactive group for subsequent reaction with a functionalizing reagent. Alternatively, the functionalized capping agent can include a nonreactive functional group (i.e., one that has the desired functionality without further reaction).

In the method of preparing a telechelic polymer, the at least one ruthenium or osmium carbene catalyst is functionalized.

The functionalized carbene catalyst can include a latent reactive group for subsequent reaction with a functionalizing reagent. Alternatively, the functionalized carbene catalyst can include a nonreactive functional group (i. e., one that has the desired functionality without further reaction).

Thus, the present invention provides a method of preparing a bitelechelic polymer. The method involves: polymerizing at least one monomer comprising at least one polymerizable group in the presence of at least one functionalized ruthenium or osmium carbene catalyst to form a functionalized polymer; and combining the functionalized polymer with at least one functionalized capping agent under conditions effective to react the functionalized polymer template with the capping agent to form a bitelechelic polymer.

The terminally functionalized polymer of this invention that is synthesized employing a functionalized ROMP catalyst can, by choice of type and amount of monomer used, be synthesized to contain additional (non-terminal) functional groups, including latent reactive groups, and non-reactive groups. The terminally functionalized polymer that is reacted with a functionalized capping agent of this invention can contain additional (nonterminal) functional groups, including latent reactive groups, and non-reactive groups. Polymers containing latent reactive groups are designated polymer templates herein which can be selectively functionalized after polymer synthesis by reaction with a functionalizing reagent.

Also provided are functionalized capping agents for use in the methods of this invention.

The methods of this invention can be employed to generate libraries of multivalent arrays (polymers carrying functional groups). Methods of making such libraries are provided by this invention. A library is constructed so that the individual members of the library span a range of selected structural features, e.g., length, type and number of functional groups, functional group position, and type and number (1 or 2) of terminal functional groups. Methods of this invention allow synthesis of multivalent arrays of defined length, defined density of functional groups, defined distance between functional groups, defined combinations of differents functional groups (of defined relative number and spacing), defined position of the same or different functional groups, and defined groupings of functional groups. Libraries of multivalent arrays of this invention include those in which each of the library members has a defined length and each of the library members has a defined functional group density.

Librairies are useful in screening and selection of multivalent arrays that exhibit a desired function. Libraries of multivalent arrays for screening for various biological activities (cell surface binding, biological signaling effects, etc.) are of particular interest.

### BRIEF DESCRIPTION OF DRAWINGS

Figure 1: Schematic of two synthetic routes for the formation of random copolymers.
Figure 2: Two synthetic routes used to generate the same multivalent mannose arrays. (A) An example of the method of the present invention involving polymerization of a nonpolar activated ester monomer template 1 followed by post synthetic modification of the resultant polymer template 3 with a carbohydrate recognition element 4. (B) An example of a conventional method involving polymerization of a carbohydrate-functionalized monomer 5 under emulsion conditions.
Figure 3. Mechanism and intermediates in ring-opeaing metathesis polymerization (ROMP) demonstrating the incorporation of a functional group in the carbene catalyst and termination with a derivatized electron rich olefin.
Figure 4. Mechanism and intermediates in ring-opening metathesis polymerization (ROMP) of monotelechelic (if either R or R' includes functionality) and bitelechelic polymers (if both R and R' include functionality).

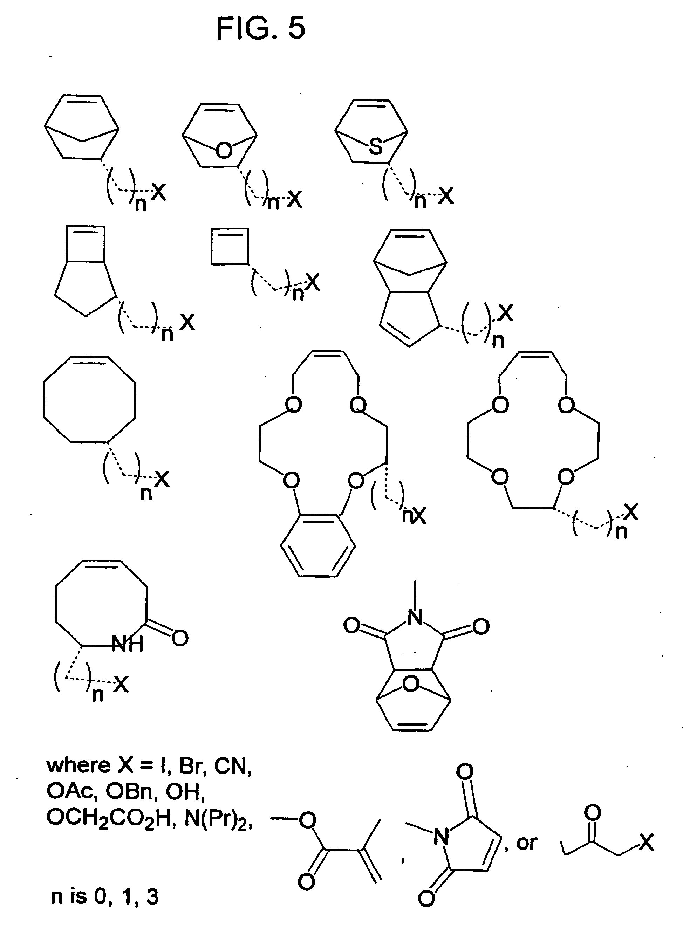

Figure 5. Examples of optionally substituted monomers suitable for use in the present invention.

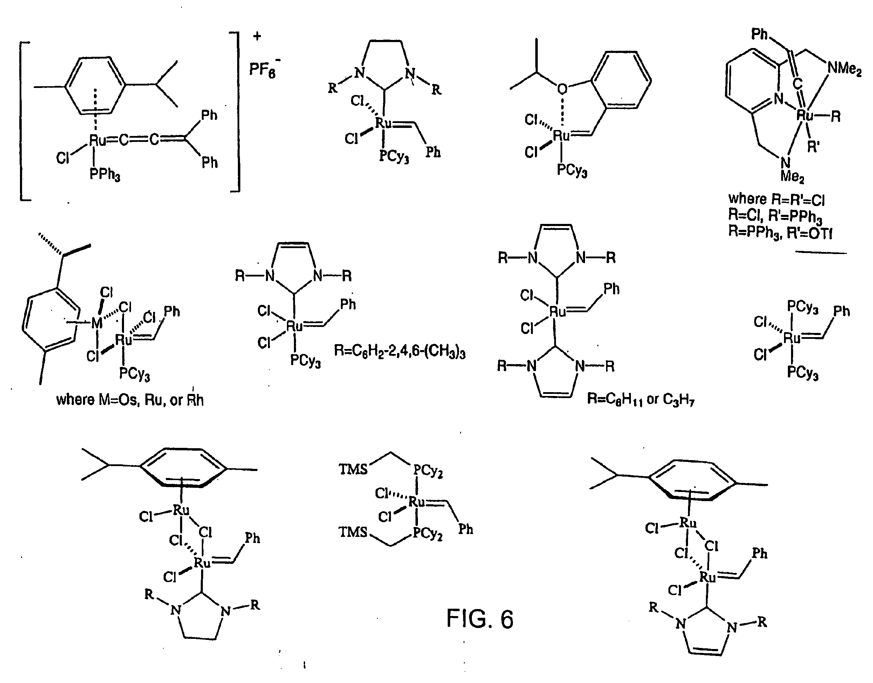

Figure 6. Examples of metal carbene catalysts suitable for use in the present invention.
Figure 7A. Examples of capping agents containing reactive functional groups.
Figure 7B. Examples of capping agents containing nonreactive functional groups.
Figure 8A. Illustration of the use of a capping agent with a cleavable linker.
Figure 8B. Illustration of an exemplary synthesis of a capping agent with a cleavable linker.
Figure 9. Examples of polymer templates that can be prepared by the methods of this invention.
Figure 10. GPC data shows that while the results from each polymerization are internally consistent, the emulsion polymerization conditions (Route B in Figure 2) yield polymers of shorter relative length than the post synthetic modification conditions (Route A in Figure 2).
Figure 11. Dependence of hemagglutination inhibition on polymer length. IC₅₀ values are reported (on a per saccharide basis). Potency was determined relative to α-methyl mannose. The results are the average of a minimum of five experiments, and the error associated with the dose determination is a factor of two, as dictated by the two fold dilutions in the assay. PSM stands for the post synthetic modification conditions of Route A in Figure 2, and E represents the emulsion conditions of Route B in Figure 2.
Figure 12. Scheme for the synthesis of end-capped polymer. Reagents and conditions: for 1 and 2 (a) 1.2-Dichloroethane (DCE), 30 minutes, for 3 (b) Dodecyltrimethylammonium bromide (DTAB) (1.6 equivalent), 2,2-bis(hydroxymethyl)-2,2',2"-nitrilotriethanol (bis-tris) buffer (100 mM, pH 5.9), DCF, 45 C, 30 minutes; (c) excess capping agent 8 was added neat; (d) (2-aminoethyl)-3,6-*O*-disulfo-β-D-galactopyranoside, diisopropylcarbodiimide, Et,N, DMF, H₁O; (e) 50 mM NaOH, 60 C, 2 hours; (f) 5-((5-aminopentyl)thioureidyl) fluorescein, EDCI, *N*-hydroxysulfosuccinimide, H₂O, 24 hours.
Figure 13. Scheme for the synthesis of a fluorescent neoglycopolmer via a terminal aldehyde.
Figure 14. Fluorescein-labeled anti-L-selectin antibody (A), fluorescein-conjugated neoglycopolmer 12 (B), and fluorescein-conjugated neoglycopolymer 17 (C) binding to Jurkat cells as observed by fluorescence microscopy. Each image is an individual cell at 630x magnification and is representative of at least four independent experiments.

### DETAILED DESCRIPTION OF PREFERRED EMBODIMENTS

The present invention relates to methods for synthesizing multivalent arrays. Preferably, the present invention provides general methods that can be used for both large scale production and for the generation of libraries of oligomers, for example. Preferred embodiments of the present invention are significant because they are relatively high yielding, general, convenient, and/or efficient for the preparation of polymers of varying average lengths, varying epitope density, and varying functionality, for example. Of particular significance is the ability of the methods of the present invention to control the formation of arrays of varying length.

In one aspect, the methods of the present invention are based on the post-polymerization modification of polymer backbone generated by metal carbene-catalyzed ROMP system. In contrast to conventional methods that incorporate the desired pendant functional groups into the monomers, such methods of the present invention attach the desired pendant functional groups to preformed polymers. Significantly, the attachment of pendant functionality to preformed polymers generated by metal carbene-catalyzed ROMP provides better control and access to a wider variety of materials than previous methods were able to provide. Such materials provide unique surface or ligands for a wide variety of natural and synthetic receptors.

Generally, the methods involve the use of a monomer and a ROMP metal carbene catalyst (also referred to as a metal carbene catalyst) to form an intermediate polymer (referred to herein as a polymer template). Preferably, the monomer and ROMP catalyst are sufficiently soluble in a common solvent, typically an organic solvent or mixture of solvents, to allow for the polymerization of the monomer, although the reaction can be carried out in the absence of a solvent (i.e., neat). Alternatively, more polar solvents such as water can be used if the metal carbene catalyst and the monomer are mutually soluble. The monomer includes in its structure at least one polymerizable group and at least one latent reactive group for subsequent attachment of a pendant functional group (i.e., subsequent functionalization). Thus, suitable latent reactive groups are those that are unreactive during the initial ROMP reaction but reactive during the subsequent functionalization (hence, the term "latent"). Examples of latent reactive groups include activated leaving groups such as an activated ester or protected functional groups such as a protected amine. As used herein, a "protected" group is one in which the intrinsic reactivity of the group is masked temporarily (i.e., the "mask" can be removed). Preferably, the monomer is a nonpolar monomer (i.e., one that is soluble in organic solvents), which can simplify isolation of the resultant polymer.

The resultant intermediate polymer acts as a template to which one or more functional groups can be appended using one or more functionalizing reagents that react with the latent reactive groups. In a typical reaction only one type of functional group is appended to a polymer template; however, by using less than stoichiometric amounts of several functionalizing reagents, several different functional groups can be appended to the polymer template. These functional groups may provide a recognition element (i.e., binding site) for a biological entity, such as a cell surface receptor. Alternatively, they may be generally unreactive (e.g., nonbinding to a cell surface receptor). Thus, the resultant polymers may be bioactive or biocompatible.

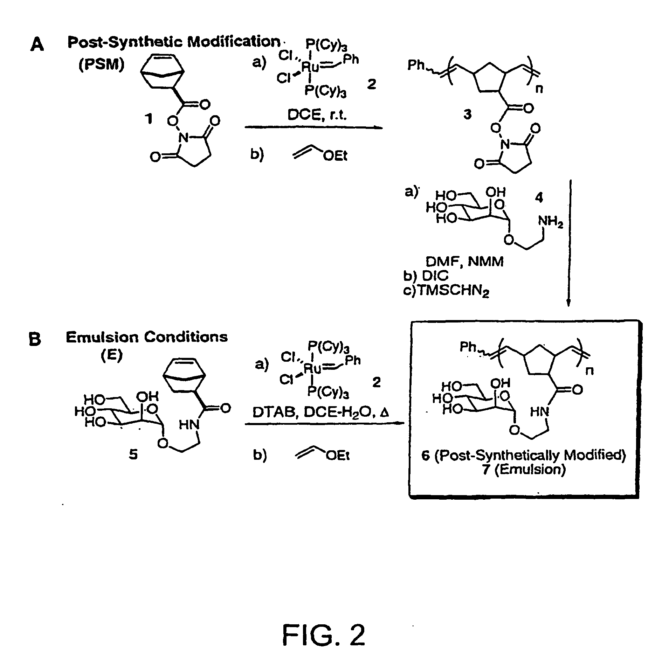

In the initial ROMP reaction, varying the ratio of monomer to ROMP catalyst (i.e., initiator) results in varying the length of the resultant polymer. Also in the initial ROMP reaction, different monomers can be used. A random copolymer can be made by polymerizing two or more different monomers. Each of the monomers can have different latent reactive groups for subsequent attachment of pendant functional groups. This is one way in which different pendant functional groups can be appended to the backbone, in addition to the method described above which depends on the addition of less than stoichiometric amounts of several functionalizing reagents. Alternatively, a block copolymer can be made by polymerizing a first monomer, adding a second monomer once the first monomer is completely consumed, etc. Another way in which to incorporate different pendant functional groups is to use a monomer that already includes a desired pendant functional group that requires no further functionalization, which is unreactive during the ROMP reaction, as is done in conventional ROMP methods (see, for example, Compound 5, Figure 2, Route B). Using monomers with and without pendant functional groups provides additional advantage to the methods of the present invention.

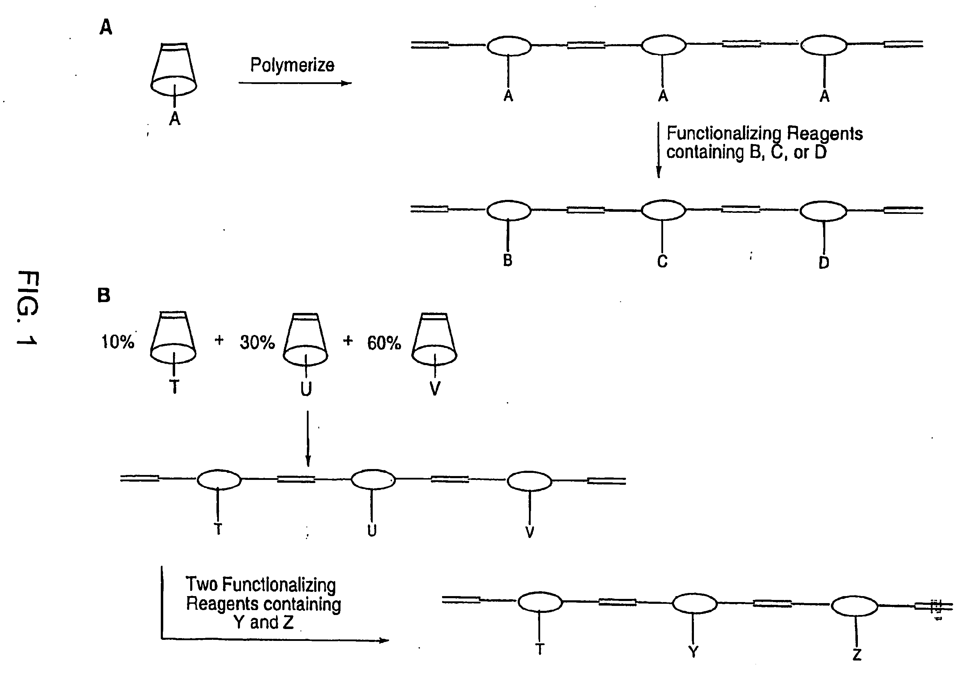

A schematic of these various methods of making random polymers is shown in Figure 1. In Figure 1A, a single monomer is used to make a polymer template having the same latent reactive group (A) per repeat unit, to which less than stoichiometric amounts of three different functionalizing reagents (one containing functional group B, one containing functional group C, and one containing functional group D) are added to form a polymer having the same repeat unit in the backbone with different pendant functional groups (B, C, D). Alternatively, different monomers could be used, each with the same latent reactive group, to form a polymer template having different repeat units in the backbone but the same latent reactive groups. In Figure 1B, different monomers, some of which have different latent reactive groups (U, V) and stable functional groups (T), are polymerized to form a polymer template having different repeat units and different latent reactive groups to which two different functionalizing reagents are added, either sequentially or simultaneously, to form a polymer having different repeat units in the backbone with different pendant functional groups (T, Y, Z).

Subsequent to the initial ROMP reaction and/or subsequent to the addition of pendant functional groups, the backbone of the polymer can be optionally modified for additional advantage. For example, the backbone can be reduced to eliminate double bonds (as through the use of a diimide) or oxidized to form hydroxyl groups (as through the use of OsO₄). Other alkene functionalization can also be incorporated into the backbone to yield desired materials.

An example of one synthetic routes according to the above-described method is shown in Figure 2. In this example, multivalent mannose arrays are prepared. Figure 2A shows an example of a method involving polymerization of a nonpolar activated ester monomer 1 followed by post synthetic modification of the resultant polymer template 3 with a carbobydrale-containing functionalizing reagent 4. For comparison purposes, Figure 2B shows an example of a conventional method involving polymerization of a carbohydrate-functionalized monomer 5 under emulsion conditions.

The present invention provides methods and reagents for the terminal attachment of new functional groups to materials generated by ROMP. Preferred embodiments of the methods of the present invention are significant because they are relatively high yielding, general, convenient, and/or efficient for the preparation of polymers of varying average lengths, varying type, number and distribution of functional groups and varying terminal functionality, for example. Significantly, the attachment of chain terminating functionality to polymers generated by metal carbene-catalyzed ROMP provides access to a wider variety of materials than previous polymerization methods were able to provide. Such materials provide unique surfaces or ligands for a wide variety of natural and synthetic receptors.

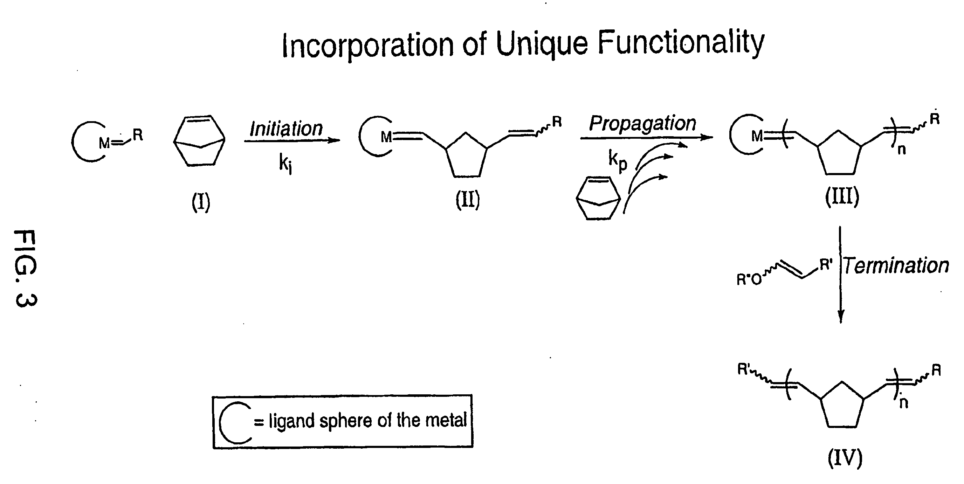

In preferred ROMP methods for this invention, the rates of termination and chain transfer are relatively slow compared to propagation. When initiation (kᵢ) is fast relative to propagation (kₚ) such that kᵢ > kₚ, homogeneous materials of controlled lengths and low polydispersities can be generated (Figure 3). In a living polymerization, the active metal carbene center is present at the end of each chain after the monomer is consumed (Figure 3, III). This species can react with electron-rich alkenes to yield a product with a terminal alkene (IV), which can be functionalized, and an unreactive alkoxy-substituted ruthenium metal carbene. A significant advantage to this strategy is that only living chains can acquire the functionality, resulting in a more homogeneous population of functionalized materials.

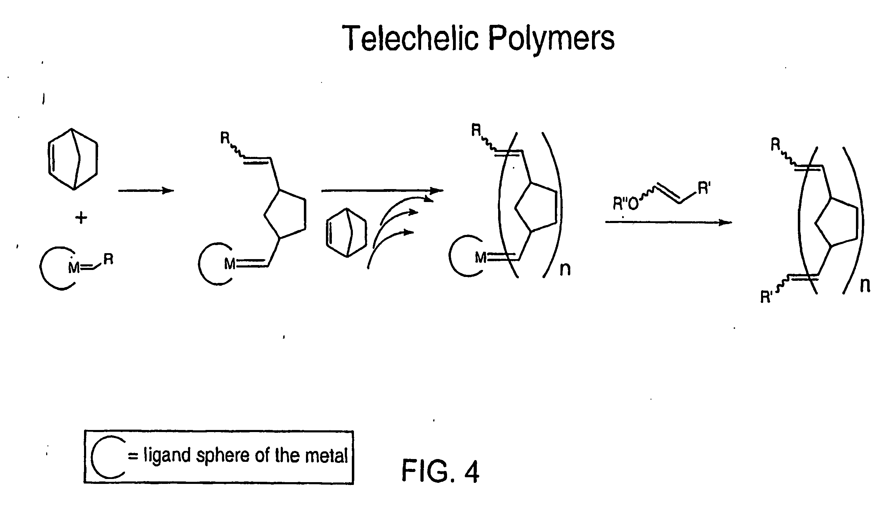

As shown in Figure 4, this strategy generates telechelic polymers, i.e., a polymer that contains one or more end groups with unique functionality. This approach has a distinct advantage over previous methods because the length of each polymer block can be controlled. Telechelic polymers can have one or more unique end groups and in this method these would be accessible. Referring to, Figure 4, monotelechelic polymers are those products in which either R or R' includes functionality, whereas bitelechelic polymers are those products in which both R and R' include functionality. For example, monofunctional polymers can be the result of using a functionalized capping agent or a functionalized catalyst, as described in greater detail below. In turn, the bitelechelic polymers can be created when both a functionalized catalyst and a functionalized capping agent are used. In addition to the biological examples disclosed, telechelic polymers are often used in the synthesis of crosslinked plastics. Enhancement of desired properties, such as thermal stability, may result from the ability to generate defined, homogeneous materials.

The methods of this invention for terminal functionalization of polymers involves either conventional ROMP methodology or the improved methodology in which the polymer template is synthesized carrying latent reactive groups which can be selectively functionalized after polymer synthesis (as described above).

In the latter (improved) method, a monomer is used that includes in its structure at least one polymerizable group and at least one latent reactive group for subsequent attachment of a pendant functional group (i.e., subsequent functionalization). Thus, suitable latent reactive groups are those that are unreactive during the initial ROMP reaction. Examples of monomer latent reactive groups include activated leaving groups such as an activated ester or protected functional groups such as a protected amine. As used herein, a "Protected" group is one in which the intrinsic reactivity of the group is masked temporarily (i.e., the "mask" can be removed). The resultant polymer acts as a template to which one or more functional groups can be appended using one or more functionalizing reagents that react with the latent reactive groups derived from the monomers (herein referred to as monomer latent reactive groups). These functional groups may have biological function, for example, they may provide a recognition element (i.e., binding site) for a biological entity, such as a cell surface receptor. Alternatively, they may be generally unreactive (e.g., nonbinding to a cell surface receptor). Thus, the resultant polymers may be bioactive or biocompatible.

Suitable monomers for use in the methods of the present invention, have at least one polymerizable group (and often only one polymerizable group). Monomers can carry a pendant functional group or have no pendant functional group. The functional group can be a nonreactive group or a latent functional group as discussed above. In a specific embodiment, monomers that carry at least one latent reactive group (used for later functionalization) can be used to make a polymer template, as described above.

Suitable monomers are those that are stable to the ROMP polymerization conditions. Preferably, suitable monomers are those that can be polymerized through ROMP under standard conditions. More preferably, the monomers include substituted cyclic (e.g., monocyclic, bicyclic, tricyclic, or higher order cyclics) mono-olefins. Examples include, but are not limited to, strained olefins such as norbornene, cyclobutene, and less strained olefins such as cyclooctene. Such substituted cyclic mono-olefins can also include heteroatoms and functional groups within the ring, including, for example, thioethers (RSR' or R₂S), ethers (ROR' or R₂O), amines (*primary* RNH₂; *secondary* RR"NH or R₂NH; *tertiary* RR'R"N or R₂R'N or R₃N), amides (i.e. RCONHR'), and esters (RCo₂R'). Examples of such olefins include oxanorbornene, 7-thia-bicyclo[2.2.1]hept-2-ene, and 3,6,7,8-tetrahydro-1H-azocin-2-one, the structures of which are as follows:

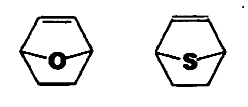

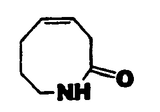

Additional examples of suitable monomers for ROMP methods are disclosed, for example, in various documents cited in the Background Section, as well as in U.S. Pat. Nos. 5,831,108, 5,342,909, 5,710,298, 5,312,940, 5,750,815, 5,880,231, 5,849,851, 4,883,851, and 5,587,442 and in Wu et al. Macromolecules, 26, 4975-4977 (1993); Hillmyer et al. Macromolecules, 25, 3345-3350 (1992); Maughon et al. Macromolecules, 30, 3459-3469 (1997); Maynard et al. Macromolecules, 32, 6917-6924 (1999); Hillmyer et al. Macromolecules, 28, 6311-6316 (1995); Maughon et al. Macromolecules, 29, 5765-5769 (1996). Figure 3 provides additional specific examples of several useful monomers.

Monomers optionally contain pendant groups that can be functional groups, non-reactive groups or latent reactive groups. The latent reactive groups on the monomers that are used for selective functionalization after polymerization can include electrophilic or nucleophilic groups. Analogously, the compounds from which these later added functional groups are derived (i.e., the functionalizing reagents) can include electrophilic or nucleophilic groups. These two sets of groups may be the same or different, although for any two reactants (monomer and functionalizing reagent) the latent reactive groups are matched to allow for reaction and attachment of the pendant functional group to the polymer template. The functionalizing reagents can include a wide variety of molecules that confer useful properties to the resultant polymer (e.g., biological activity), such as a carbohydrate or a peptide, for example. Thus, the pendant functional groups may provide a recognition element (i.e., binding site) for a biological entity, such as a cell surface receptor. Alternatively, they may be generally unreactive (e.g., nonbinding to a cell surface receptor). The polymer may include combinations of such groups. For example, a polymer can include alternating blocks of a recognition element and an unreactive element

Examples of electrophilic latent reactive groups include, but are not limited to, acyl sulfonamides (RCONHSO₂R'), acyl azides (RCON₃), epoxides (RR'COCR"R"'), anhydrides (RCO₂COR'), esters (RCO₂R'; including activated esters such as pentafluorophenyl esters and N-hydroxysuccinimidyl esters), carboxylic acids (RCO₂H; including activated acids such as acyl halides RCOX wherein X = Br, I, Fl, Cl), halides (F, Br, Cl, I), boronic acids and esters (RB(OH)₂; RB(OH)(OR"); RB(OR')₂), ketones (RCOR'), aldehydes (RCHO), phosphoric acid esters (mono-, di-, and triesters, such as PO(OR)(OH)₂; PO(OR)₂(OH); PO(OR)₃), phosphites (POR₃), acyl nitriles (RCOCN), alkenes (RR'CCR"R"'), alkynes (RCCR'), and the like. Examples of nucleophilic latent reactive groups include, but are not limited to, amines (*primary* RNH₂; *secondary* RR"NH or R₂NH; *tertiary* RR'R"N or R₂R'N or R₃N), azides (RN₃), hydroxyls (ROH), thiols (RSH), sulfones (R₂SO₂ or RSO₂R'), acyl hydrazides (RCONHNH₂), phosphites (POR₃), hydrazines (RHNNH₂), oximes (RHCNOH), isocyanates (RNCO), hydroxamic acids (RCONHOH), thiocyanates (RSCN), and the like. The stereochemistry of these groups may be defined or racemic. If desired these groups may be protected with groups such as carbamate (RNHCO₂R'), carbonate (ROCO₂R'), thioethers (RSR' or R₂S), disulfides (RSSR' or RSSR), nitro groups (RNO₂), and the like.

Suitable monomers may also include one or more appended groups that are not used for functionalization (i.e., nonreactive under the conditions of functionalization). Such groups include hydroxyls (ROH), alkyls, aryls, halides (F, Br, Cl, I), amides (RCONHR'), thiols (RSH), and the like. The stereochemistry of these groups may be defined or racemic. Although some of these groups are the same as the latent reactive groups, they are not as reactive under the conditions chosen for attachment of the pendant functional group and are referred to herein as stable functional groups. Thus, stable is used in this context as a relative term to refer to groups that are unreactive under the chosen conditions.

An example of a class of suitable monomers based on the norbornene ring structure has the following general structure: 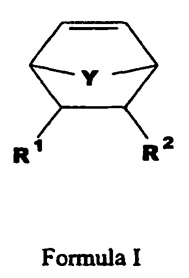 wherein Y is CH₂, O, S, or N-R³ (wherein R³ is H or an organic group), R¹ and R² Rmay be H or an organic group, and R¹ and R² together may form a n alicyclic or aromatic ring. R', R² or both may contain a functional group or a latent reactive group. In a preferred embodiment, at least one of R¹ or R² includes a latent reactive group as defined above, such as an activated ester. A specific example is bicyclo[2.2.1]hept-5-ene-*exo*-2-carboxylic acid *N-*hydroxysuccinimide ester (Compound 1,Figure 4).

The monomers can be prepared using standard organic synthetic techniques known to one of skill in the art. For example, the monomer bicyclo[2.2.1]hept-5-ene-exo-2-carboxylic acid can be synthesized according to the procedure of Ver Nooy et al., J. Am. Chem. Soc., 77, 3583-3586 (1955).

One or more prefunctionalized monomers can be employed to synthesize a polymer that is terminally functionalized by methods described herein. One or more monomers carrying different latent reactive groups can be used to synthesize a polymer template that can be terminally functionalized by methods described herien. One or more monomers carrying latent reactive groups may be used alone or in combination with one or more prefunctionalized monomers (i.e., those having pendant groups that do not require further functionalization) to form a polymer template that is terminally functionalized by methods described herein.

Thus, the monomers that can be polymerized to form polymers that are subsequently functionalized at their terminii according to the methods of the present invention can include a variety of functionality such as: (1) monomer latent reactive groups that can be functionalized to include pendant functional groups after polymerization; (2) non-reactive functionality that does not require further functionalization to produce the desired pendant functional groups (which can be simple or complex); or (3) no pendant functional groups (as in norbornene). Various combinations of such monomers can be used in the methods of the present invention to provide block or random copolymers.

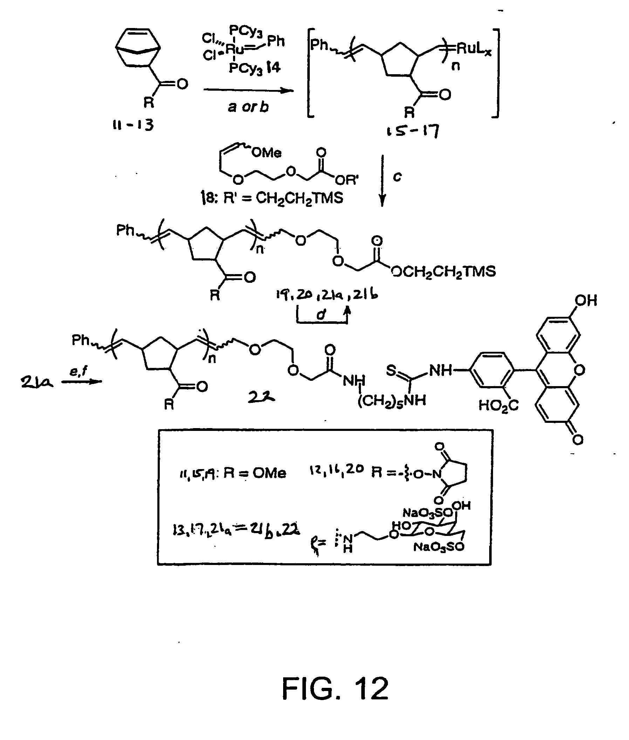

In either ROMP reaction (conventional or the improved reaction described herein), varying the ratio of monomer to ROMP catalyst (i.e., initiator) results in varying the length of the resultant polymer. The polymer (or polymer template) is preferably prepared by polymerizing one or more monomers using a metal carbene catalyst (i.e., a compound containing a metal carbene (M=CR⁴R⁵) bond that catalyzes metathesis reactions, wherein the R⁴ and R⁵ groups are each independently H or an organic group (which may include functionality, such as the latent reactive groups or nonreactive functional groups described below), and "M" represents a metal (preferably, ruthenium or osmium) bonded to one or more ligands in a ligand sphere). Specific examples of suitable catalysts include, but are not limited to, Grubb's ruthenium metal carbene catalyst (Compound 14, Figure 12) and the compounds shown in Figure 3 and disclosed in Kingsbury et al., J. Amer. Chem. Soc., 121, 791-799 (1999); Schwab et al., J. Amer. Chem. Soc., 118, 100-110 (1996); Dias et al., Organometallics, 17, 2758-2767 (1998); del Rio et al., Tetrahedron Lett., 40, 1401-1404 (1999); Furstner et al., Chem. Commun., 95-96 (1999); Huang, J. et al. Organometallics, 18, 5375-5380 (1999); Weskamp et al., Angew. Chem., Int. Ed Engl., 37, 2490-2493 (1998); Westkamp, T. et al. J. Organometal. Chem., 582, 362-365 (1999); Robson, D.A. et al. Macromolecules, 32, 6371-6373 (1999); Scholl et al., Organic Letters, 1, 953-956 (1999); and Scholl et al., Tetrahedron Lett., 40, 2247-2250 (1999). Others include those disclosed in, for example, U.S. Pat Nos. 5,831,108 (Grubbs et al.), 5,342,909 (Grubbs et al.), 5,710,298 (Grubbs et al.), 5,312,940 (Grubbs et al.), 5,750,815 (Grubbs et al.), 5,880,231 (Grubbs et al.), 5,849,851 (Grubbs et al.), and 4,883,851 (Grubbs et al.).

A preferred group of catalysts include those that react with electron rich alkenes (as discussed in greater detail below), and preferably have at least one latent reactive group (referred to herein as a catalyst latent reactive group) and/or at least one desired nonreactive functional group. Nonreactive functional groups include, for example, natural products or analogs thereof, metal chelators, metals, fluorescent probes, solid supports, and metal surfaces.

Latent reactive groups on the catalyst are analogous to the latent reactive groups on preferred monomers in that these reactive groups do not interfere with the ROMP reaction, but allow for subsequent functionalization.

The catalyst latent reactive groups that are used for functionalization include electrophilic or nucleophilic groups. Examples of electrophilic latent reactive groups include, but are not limited to, acyl sulfonamides, acyl azides, epoxides, anhydrides, esters (including activated esters such as pentafluorophenyl esters and N-hydroxysuccinimidyl esters), carboxylic acids (including activated acids such as acyl halides), halides, boronic acids, ketones, aldehydes, phosphoric acid esters (mono-, di-, and tri-esters), phosphites, acryl nitriles, alkenes, and alkynes, and the like. Examples of nucleophilic latent reactive groups include, but are not limited to, amines, azides, hydroxyls, thiols, sulfones, acyl hydrazides, phosphites, hydrazines, oximes, isocyanates, thiocyanates, and the like. The stereochemistry of these groups may be defined or racemic. If desired these groups may be protected with groups such as carbamates, carbonates, thioethers, disulfides, nitro groups, and the like. Preferably, in metal carbene catalysts of the formula M=CR⁴R⁵, wherein M represents a metal in a ligand sphere, R⁴ is an organic group that includes a latent reactive group, such as an azide, an epoxide, a cyano group, an acetal, a ketal, a carbamate, a thiocyanate, an activated ester, an activated acid, a hydrazine, or a hydrazone, and R⁵ is H or an organic group, preferably, H.

Particularly preferred catalysts have the following general formula: 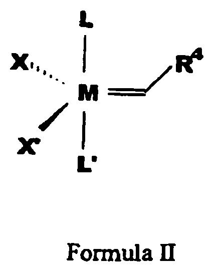 wherein M is Ru or Os, X and X' are independently an anionic ligand (preferably, halides, alkoxides, thiolates, amides, phosphides, and acyls) and X and X' together may represent a bidentate ligand, and L and L' are independently neutral ligands (preferably, arenes, ketones, alkynes, carbenes, carbonyls, imides, phosphines, arsines, amines, imines, and nitriles) and L and L' to gether may represent a bidentate ligand, and R⁴ is an organic group that includes a latent reactive group. Preferably, R⁴ is an organic group that includes an azide, an epoxide, a cyano group, an acetal, a ketal, a carbamate, a thiocyanate, an activated ester, an activated acid, a hydrazine, or a hydrazone. Alternatively, R⁴ is an organic group that includes a nonreactive functional group selected from natural products or analogs thereof, metal chelators, metals, fluorescent probes, solid supports, and metal surfaces. In cases in which R⁴ includes a solid support or a metal surface, the R⁴ group will typically, include a linker group LK which provides fora selected spacing from the solid or metal surface, as well as provides functionality that forms a bond (covalent or noncovalent) to the solid or metal surface.

LK is a linking group that is an organic group having functionality that allows attachment to a solid or a metal surface. LK may directly attach to surface groups on the solid. In some cases the solid may be functionalized and_the LK group then bonds to the functional groups that have been added to the solid. The LK group can contain additional repeated units that are aliphatic or aromatic to provide for spacing from the surface. LK can, for example, have the formula: -(M)m-LK₁-(N)p-LK₂, where M and N are the same or different organic groups; m and p are integers ranging from 0 to about 20 and LK, and LK₂ are functional groups. M and N can, for example, be aliphatic groups or aromatic groups or combinations thereof, which are optionally substituted, preferably with non-reactive groups. (M)m or (N)p can be aromatic groups, e.g., phenyl rings, linked by aliphatic groups, e.g., olefins or alkynes. LK, can be a functional group that simply links the -M- and -N- chains or it can be a latent reactive group, as described above, that can be reacted to introduce different functionality or that can be cleaved to result in cleavage of the LK group from the solid. LK₂ contains functionality that allows linkage (covalent or noncovalent) to the solid. LK₂ can, for example, contain a thiol group, an activated ester group or an amine group. LK, can be any of a variety of functional groups, including among others, -O-, -S-, -CO-, -COO-, CO-NR'-(where R' is hydrogen or an organic group, e.g., an alkyl group). In addition, non-neighboring CH₂ groups in M and N can be replaced with -O- or -S-. LK, can also contain functionality in which one or more bonds can be broken, either chemically, enzymatically or photochemically, to cleave the LK group. Cleavable LK₁ include, among others, esters, and amides.

An exemplary metal carbene ROMP catalyst which is attached to a solid support or a metal surface has the formula: 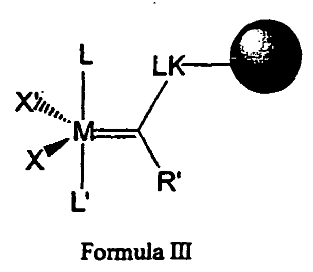 where M, X, X', L, L' and LK are as defined above in Formula II, R' is hydrogen or an organic group and is preferably hydrogen and LK is a n optional linker group. The catalyst can be directly linked to a solid support as illustrated in Barrett el al Organic Letters, 1, 1083-1086 (1999).

The catalysts can be used to incorporate functionality at a terminus of the polymer to allow, for example, for coupling of two polymers together, coupling of the polymer to a solid support, or modification of the polymer with small molecules, fluorescent probes, proteins, metals, metal chelators, etc. Thus, catalysts useful in the methods of the present invention can include a variety of functionality (in at least one of R⁴ or R⁵ in the catalyst M=CR⁴R⁵) such as: (1) catalyst latent reactive groups that can be functionalized to include terminal functional groups after polymerization; (2) nonreative functionality that does not require further functionalization to produce the desired terminal functional groups; or (3) no functional groups. Various combinations of such catalysts can be used in the methods of the present invention.

The initial polymerization is preferably carried out in a solvent or mixture of solvents, typically one or more organic solvents, in which the monomer and catalyst are mutually soluble, although in certain embodiments, no solvent is requited. Suitable solvents include substituted and unsubstituted aliphatic and aromatic hydrocarbon solvents such as chlorinated hydrocarbons, ethers, protic hydrocarbons, etc., which are unreactive under the reaction conditions. Examples include 1,2-dichloroethane, benzene, toluene, p-xylene, methylene chloride, dichlorobeozene, tetrahydrofuran, diethylether, pentane, water, methanol etc.

The conditions of the polymerization reaction (e.g., temperature, time, atmosphere) will vary depending on the choice of monomer and catalyst, and can be selected by one of ordinary skill in the art without undue experimentation. Preferably, the ROMP reaction is carried out at a temperature of about 20°C to about 30°C (i.e., room temperature) or higher under an inert atmosphere (e.g., nitrogen or argon), although temperatures ranging from about -20°C to about 123°C are possible. Pressure is not critical but may be varied to maintain a liquid phase reaction mixture. Reaction times can vary from several minutes to several days.

Typically, in ROMP reactions, the polymer is terminated by reacting the catalyst with a capping agent. This capping agent is typically matched to the catalyst. For ruthenium catalysts, for example, ethyl vinyl ether has been used. Although such a reagent could be used in the present invention, preferably, an electron rich alkene is used to incorporate terminal functionality in the polymer. As used herein, an electron rich alkene is one that has greater electron density than that of ethylene. In conventional capping methods, the capping agent is a vinyl ether, typically ethyl vinyl ether, that yields a material with a terminal alkene and a deactivated alpha-oxygen-substituted ruthenium metal carbene (Hillmeyer et al., Macromolecules, 28, 6311-6316 (1995)).

In contrast, the capping agent of the present invention, a bifunctional capping agent, incorporates an electron donating group, and either a latent reactive group for subsequent functionalization (e.g., to incorporate functionality at a terminus of the polymer to allow for coupling of two polymers together; coupling to a solid support, or metal surface; modification with small molecules, such as, fluorescent probes, metals, metal chelators, etc.); modification with natural products (e.g., typically large biological molecules) including, peptides, proteins, carbohydrates, nucleic acids, etc. or a nonreactive functional group that does not require further functionalization (i.e., it is the functionality that is desired to be incorporated into the polymer at a terminus, such as reporter groups to facilitate detection such as fluorescent groups, chemiluminescent groups, enzymes, antibodies, biotin, radioactive groups, etc.). Thus, in a similar manner to that of the catalyst, capping agents useful in the methods of the present invention can include a variety of functionality (in at least one of R⁶ or R⁷ in the capping agent D-C=CR⁶R⁷) such as: (1) capping agent latent reactive groups that can be functionalized to include terminal functional groups after polymerization; (2) nonreactive functionality that does not require further functionalization to produce the desired terminal functional groups; or (3) no functional groups (as in ethyl vinyl ether). Various combinations of such capping agents can be used in the methods of the present invention.

Significantly, the catalysts and capping agents of the present invention are of general utility for controlling the structure of the termini of living metal (particularly, osmium- or ruthenium-)initiated ROMP reactions. Selective incorporation of single end groups into polymers will facilitate the creation of bifunctional polymers that can be appended to other oligomers, selectively immobilized, used for detection, used for quantitative binding studies, or to investigate polymer structure. The resulting materials can be conjugated to any of a number of reporter molecules, including a variety of fluorescent compounds, biotin, antibodies, enzymes, lipids, and solid supports. The functional group tolerance of the metal carbene initiator, the flexibility in catalyst selection, the generality of the post-synthetic functionalization protocol, and the versatility of the capping strategy expands significantly the scope of useful materials that can be generated by ROMP.

The spacing of functional groups in a polymer can be controlled in part by appending polymers with different functional groups to each other via reaction of selected terminii. A composite polymer composed of two or more polymers can be synthesized by appropriate incorporation of end groups in the component polymers which are then bonded together through reaction of the incorporated end groups. Composite polymers having a selected distribution or spacing of one or more functional groups can be synthesized in this way.

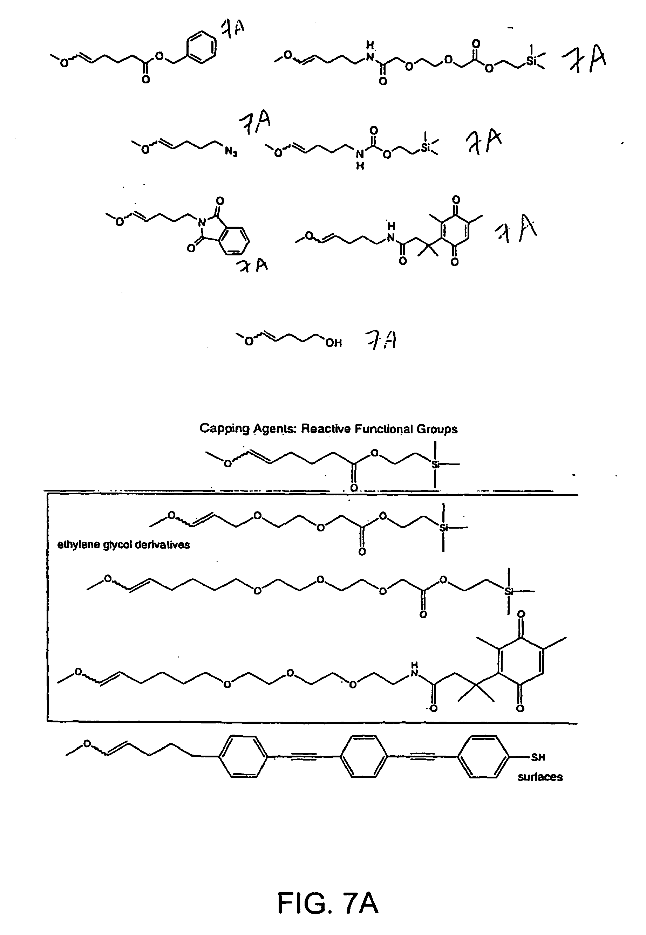

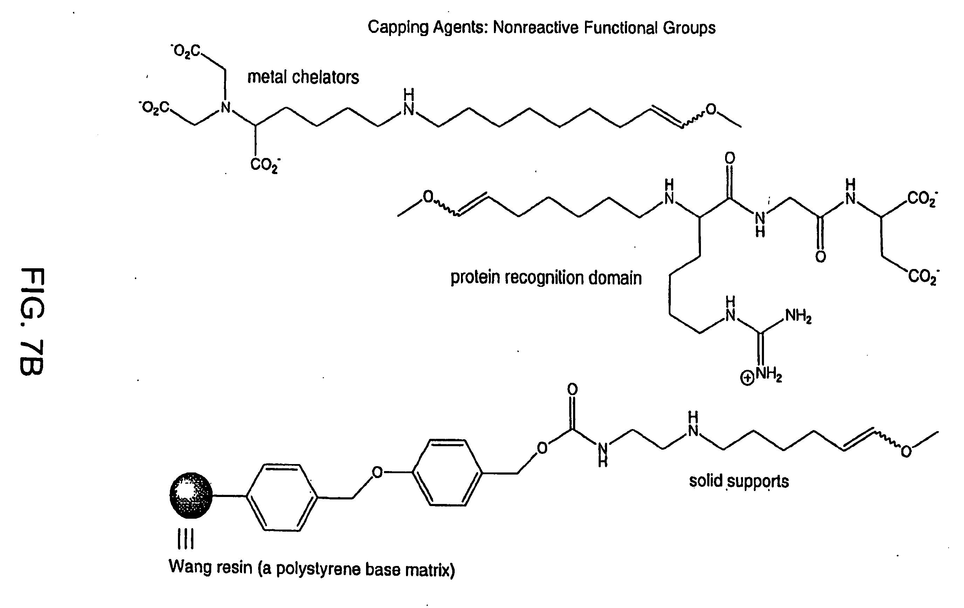

Typically, the capping agent has the following general structure: 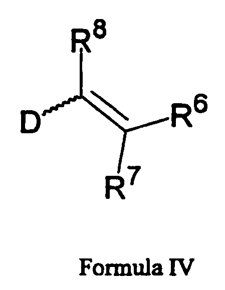 wherein D is an electron donating group (i.e., one that causes an overall increase in olefin electron density when compared to ethylene. D, which can include SR⁹, OR⁹, or a halogen, where R⁹ is a hydrogen or an organic group, and preferably is an alkyl group. R⁶, R⁷ and R⁸ are, independently, hydrogen or an organic group, and at least one of these groups preferably includes a latent reactive group or a nonreactive functional group that does not require further functionalization. R⁸ is preferably hydrogen. Although both R⁶ and R⁷ can include functionality, preferably, only one does, and more preferably, the other is H. In one preferred embodiment, R⁶ can include a latent reactive group selected from an azide, a nitro group, a disulfide, a hydrazine, a hydrazide, a hydroxylamine, an aldehyde, a ketone, an epoxide, a cyano group, an acetal, a ketal, a carbamate, a thiocyanate, an activated ester, or an activated acid. Alternatively, in another preferred embodiment R⁶ can be a nonreactive functional group that is selected from natural products or analogs thereof (e.g., biotin), metal chelators (such as nitrilotriacetic acid), metals (such as Zn), fluorescent probes (such as an amide derived from BODIPY FL EDA which is 4,4-difluoro-5,7-dimethyl-4-bora-3a,4a-diaza-s-indacene-3-propionyl ethylenediamine), solid supports (such as polyethylene resins), and metal surfaces (such as gold surfaces used for surface plasmon resonance (SPR)). Examples of capping agents containing reactive functional groups are illustrated in Figure 7A and examples of capping agents containing nonreactive functional groups are illustrated in Figure 7B.

In a specific embodiment, the capping agent provides for a covalent or noncovalent attachment to a solid. Exemplary capping agents for attachment to a solid include those of formula: 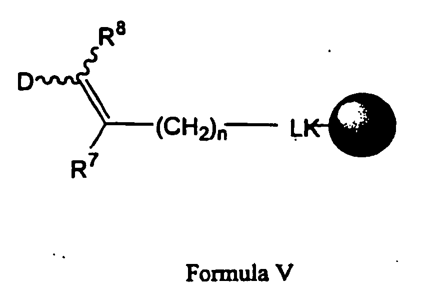 where D is an electron donating group as defined above; R⁸ and R⁷ are hydrogens or an
organic group and preferably both hydrogens; n is an integer ranging from 1 to about 20; and LK is a linking group that is an organic group having functionality that allows attachment to a solid. LK may directly attach to surface groups on the solid. In some cases the solid may be functionalized and the LK group then bonds to the functional groups that have been added to the solid. The LK group can contain additional repeated units that are aliphatic or aromatic to provide for spacing from the surface. LK can, for example, have the formula: -(M)m-LK₁-(N)p-LK₂, where M and N are the same or different organic groups; m and p are integers ranging from 0 to about 20 and LK, and LK₂ are functional groups. M and N can, for example, be aliphatic groups or aromatic groups or combinations thereof, which are optionally substituted, preferably with non-reactive groups. (M)m or (N)p can be aromatic groups, e.g., phenyl rings, linked by aliphatic groups, e.g., olefins or alkynes. LK, can be a functional group that simply links the -M- and -N- chains or it can be a latent reactive group, as described above, that can be reacted to introduce different functionality or that can be cleaved to result in cleavage of the LK group from the solid. LK₂ contains functionality that allows linkage (covalent or noncovalent) to the solid. LK₂ can, for example, contain a thiol group, an activated ester group or an amine group. LK, can be any of a variety of functional groups, including among others, -O-, -S-, -CO-, -COO-, CO-NR'- (where R' is hydrogen or an organic group, e.g., an alkyl group). In addition, non-neighboring CH₂ groups in M and N can be replaced with -O- or -S-. LK, can also contain functionality in which one or more bonds can be broken, either chemically, enzymatically or photochemically, to cleave the LK group. Cleavable LK, include, among others, esters, and amides.

In a specific embodiment, the capping reagent is a cleavable linker to a solid surface or support. The cleavable linker capping agent is an organic group having (1)an electron rich olefin for reaction to cap the polymer; (2) functionality that is covalently or non-covalently linked to (or a latent reactive group that can be covalently or non-covalently linked to) the solid and (3) intermediate between (1) and (2) latent functionality that can be chemical, enzymatically or photochemically cleaved. Exposure of the capped polymer to appropriate chemical, enzymatic or photochemical conditions allows selective cleavage of the polymer from the solid. For example, the cleavable linker capping agent can be reacted with the polymer to attach the polymer to a solid surface. The solid can then be washed to remove non-specifically attached materials, e.g. to purify the polymer. Thereafter, the purified polymer can be treated chemically, enzymatically or photochemically to cleave the linkage to the solid support and release polymers from the solid.

A specific preferred photochemically cleavable capping agent has the formula: 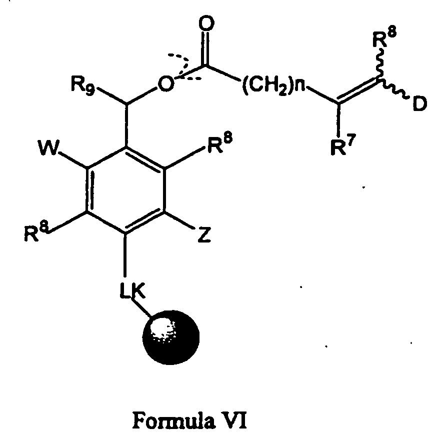 where D is defined above; R⁸, independent of other R⁸ in the capping agent, is hydrogen or an organic group; R⁷ is also a hydrogen or an organic groups; n is an is an integer ranging from 1 to about 20, R⁹ can be H or an organic group; W is an electron withdrawing group and Z is an electron donating group and LK₂ is a linker group for attachment to the solid support (shown as a sphere in the formula). The bond that can be photochemically cleaved is indicated by a dashed line in the formula. One or more non-neighboring CH₂ groups in the (CH₂)n chain can be replaced with an -O- (to provide ethers) or an -S- (to provide thioethers). R⁸ is preferably H. R⁹ is preferably a small alkyl group (i.e., having 1 to about 6 carbon atoms) and is more preferably a methyl group. W is an electron withdrawing group which can among others be NO₂, CN, CF₃, or a halogen. Z is an electron donating group which can, among others, be R, OR or SR, where R is an alkyl group, NR'₂ where R' is hydrogen or an alkyl group.

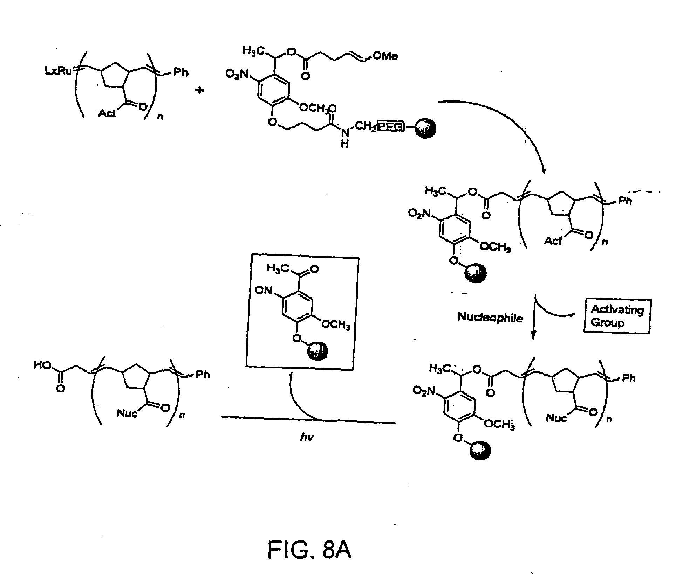

Figure 8A schematically illustrates the use of a capping agent with a cleavable linker group. A capping agent of formula VI in which the cleavable linker is bonded to a resin via PEG (polyethylene glycol) is reacted with a polymer template (containing exemplary latent reactive groups (activating groups) to attach the polymer to the resin (solid support). The Solid-supported polymer is then functionalized, by reaction with an exemplary nucleophile, to generated a solid-supported functionalized polymer. Attachment to the solid support can facilitate functionalization and purification of the polymer. The functionalized polymer can be cleaved from the solid support by irradiation using an appropriate wavlength of light. Photochemical cleavage of a variety of organic groups, including the cleavage of esters as illustrated in Figure 8A, is a well-known process. Those of ordinary skill in the art can readily employ or adapt well-known photochemical methods for use with cleavable linkers. As noted above, linkers may also be cleaved using chemical or enzymatic reactions. Again a variety of well-known chemical or enzymatic reaction can be used or readily adapted for use with cleavable linkers of this invention.

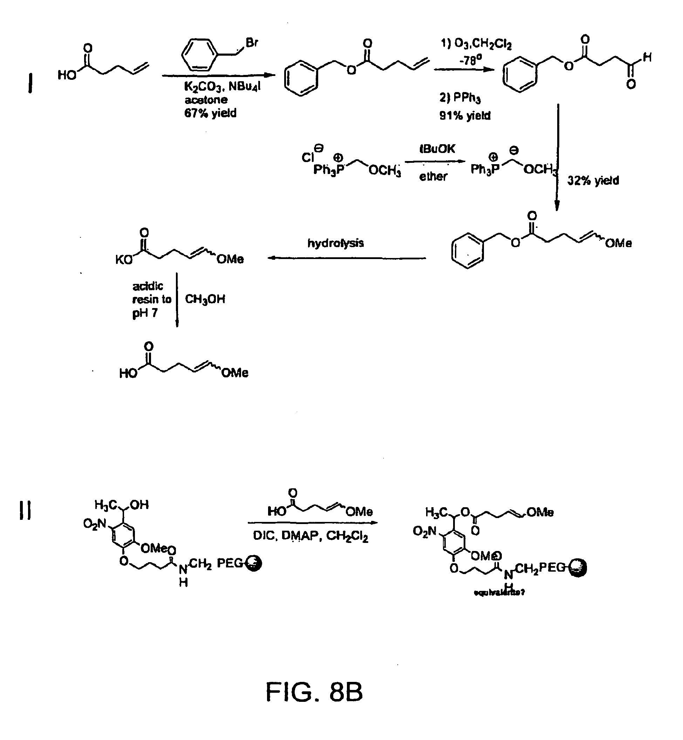

Cleavable capping agents can be synthesized by methods well-known in the art using readily available starting materials. For example, the synthesis of the capping agent of Figure 8Ais illustrated in Figure 8B and details of the synthesis are provide in the Examples.

Certain preferred capping agents include both latent or nonreactive functional groups and ethylene glycol groups. Typically, these both form a part of one or R⁶ or R⁷. A particularly preferred example of the capping agent includes an alkyl vinyl ether linked to a protected carboxylic acid derivative via an ethylene glycol chain. Because of its design, this linker minimizes nonspecific interactions with proteins or hydrophobic molecules.

The methods of the present invention involve standard coupling techniques between capping agents and polymer chains. These coupling techniques will depend on the capping agents selected and may involve solution or solid state reaction conditions. Such techniques and conditions could be readily determined by one of skill in the art, and are similar, if not the same as, the conditions of polymerization.

The functionalizing reagents (i.e., the compound from which the terminal functional group is derived if the catalyst and/or capping agent include a latent reactive group, or if the polymer includes a terminal aldehyde group) can include a wide variety of molecules that confer useful properties to the resultant polymer (e.g., fluorescence), as discussed above for the R⁶ group.

The methods of the present invention involve standard coupling techniques between functionalizing reagents and polymer (or polymer templates). These coupling techniques will depend on the latent reactive groups selected and may involve solution or solid state reaction conditions depending on the solubility of the polymer template. Such techniques and conditions can be readily determined by one of ordinary skill in the art.

The resultant polymers have the following general formula: 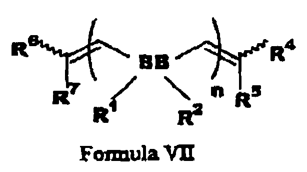 wherein "BB" represents the backbone repeat unit, which may be cyclic or acyclic, and may be the same or different in a random or block arrangement, R¹ and R² are each, independently of one another and of other R¹ and R² in different repeating units, hydrogen or an organic group containing a desired pendant functionality, R⁴ and R⁵ are each independently hydrogen or an organic group derived from the metal carbene catalyst, and R⁶ and R⁷ are each independently hydrogen or an organic group derived from the capping agent, and n is the average number of repeating monomer units, which can be varied by controlling the monomer to catalyst ratio. R¹ and R² may be the same or different as R¹ and R², respectively, in the same or different types of repeating units. At least one of R⁴, R⁵, R⁶, or R⁷ includes a latent reactive group or a nonreactive functional group, i.e. a terminal functional group. Typically, n is at least 2 and no more than about 10,000, but there is practically no limit. Polymers of this invention include those in which n is less than or equal to about 50, those in which n ranges from about 50 to about 200, those in which n ranges from about 100 to about 1,000. As discussed above, ROMP can provide polymers of varying average lengths (i.e., varying degree of polymerization, DP) depending on the monomer to ROMP catalyst (i.e., initiator) ratios. The length of all polymers described herein are referred to as the length predicted by the monomer to initiator ratio used in the polymerization reaction.

Preferably, at least one of R¹ and R² includes a protected amine or an activated ester (i.e., one that reacts under mild conditions without necessitating coupling agents, such as HATU (O-(7-azabenzotriazol-1-yl)-1,1,3,3-tetrmethyluronium hexaflurophosphate)).

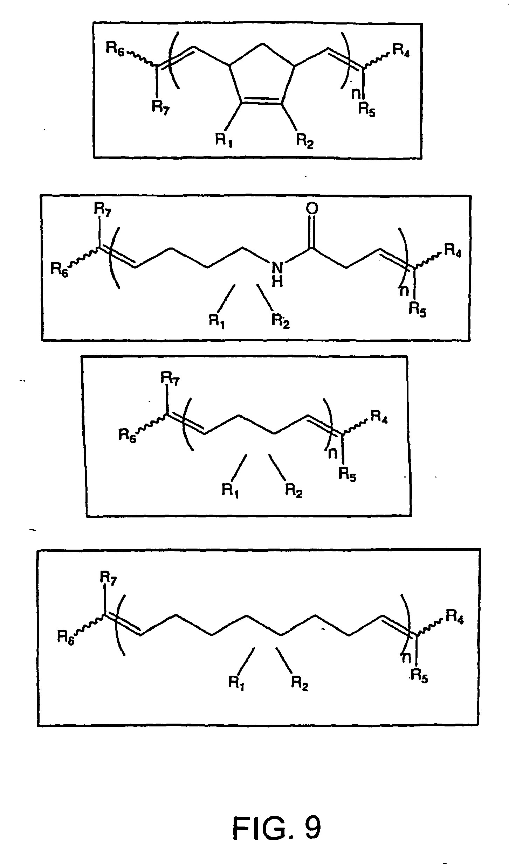

Examples of polymer templates having different backbones are illustrated in Figure 9. A preferred example of the polymer template based on the norbornene template has the following general structure: 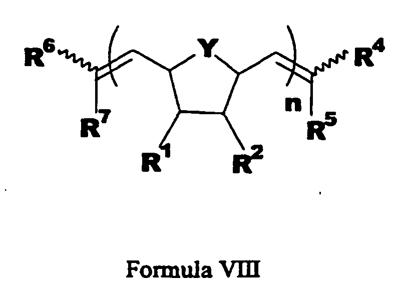 wherein Y, R¹, R², R⁴, R⁵, R⁶ , R⁷, and n are as defined above. Preferably, at least one of R¹ and R² includes a protected amine or an activated ester. A preferred polymer template is shown in Figure 2 as Compound 3. Preferably, at least one of R⁴, R⁵, R⁶, and R⁷ includes functionality derived from a functionalized capping agent and/or a functionalized metal carbene catalyst.

Another preferred example of the polymer template has the following general structure: 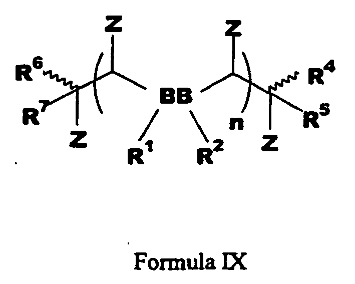 wherein BB, R¹, R², R⁴, R⁵, R⁶, R⁷, and n are as defined above, and each Z is independently H, OH, SH, X (a halide such as F, Br, I, Cl), or N(R⁸)₂ (wherein each R⁸ is independently H or an organic group). At least one of R⁴, R⁵, R⁶, or R⁷ includes a latent reactive group or a nonreactive functional group.

In the definitions of "R" groups as used herein, the term "organic group" means a hydrocarbon group (with optional elements other than carbon and hydrogen, such as oxygen, nitrogen, sulfur, phosphorus, germanium, tin, boron, and silicon, which can be in the form of various functional groups) that is classified as an aliphatic group, cyclic group, or combination of aliphatic and cyclic groups (e.g., alkaryl and aralkyl groups). In the context of the present invention, the organic groups are those that do not interfere with the formation of the polymer template or resultant polymer, unless they include the requisite reactive groups. The term "aliphatic group" means a saturated or unsaturated linear or branched hydrocarbon group. This term is used to encompass alkyl, alkenyl, and alkynyl groups, for example. The term "alkyl group" means a saturated linear or branched hydrocarbon group including, for example, methyl, ethyl, isopropyl, t-butyl, heptyl, dodecyl, octadecyl, amyl, 2-ethylhexyl, and the like. The term "alkenyl group" means an unsaturated, linear or branched hydrocarbon group with one or more carbon-carbon double bonds, such as a vinyl group. The term "alkynyl group" means an unsaturated, linear or branched hydrocarbon group with one or more carbon-carbon triple bonds. The term "cyclic group" means a closed ring hydrocarbon group that is classified as an alicyclic group, aromatic group, or heterocyclic group (which can be aromatic or aliphatic). The term "alicyclic group" means a cyclic hydrocarbon group having properties resembling those of aliphatic groups. The term "aromatic group" or "aryl group" means a mono- or polynuclear aromatic hydrocarbon group. The term "heterocyclic group" means a closed ring hydrocarbon in which one or more of the atoms in the ring is an element other than carbon (e.g., nitrogen, oxygen, sulfur, etc.).

Substitution is anticipated on the organic groups of the complexes of the present invention. As a means of simplifying the discussion and recitation of certain terminology used throughout this application, the terms "group" and "moiety" are used to differentiate between chemical species that allow for substitution or that may be substituted and those that do not allow or may not be so substituted. Thus, when the term "group" is used to describe a chemical substituent, the described chemical material includes the unsubstituted group and that group with O, N, Si, or S atoms, for example, in the chain (as in an alkoxy group) as well as carbonyl groups or other conventional substitution. Where the term "moiety" is used to describe a chemical compound or substituent, only an unsubstituted chemical material is intended to be included. For example, the phrase "alkyl group" is intended to include not only pure open chain saturated hydrocarbon alkyl substituents, such as methyl, ethyl, propyl, t-butyl, and the like, but also alkyl substituents bearing further substituents known in the art, such as hydroxy, alkoxy, alkylsulfonyl, halogen atoms, cyano, nitro, amino, carboxyl, etc. Thus, "alkyl group" includes ether groups, haloalkyls, nitroalkyls, carboxyalkyls, hydroxyalkyls, sulfoalkyls, etc. On the other hand, the phrase "alkyl moiety" is limited to the inclusion of only pure open chain saturated hydrocarbon alkyl substituents, such as methyl, ethyl, propyl, t-butyl, and the like.

For the structures illustrated herein, for each R group that can include an organic group, which can be of a significantly large size, for example, on the order of 10,000 carbon atoms, the following applies. Preferably, the organic groups of R¹ and R² are each independently a C₁-C₅₀₀₀ organic group, more preferably, C₁-C₂₀₀₀ organic group, even more preferably C₁-C₁₀₀₀ organic group, and most preferably, C₁-C₁₀₀ organic group, encompassing peptides, proteins, carbohydrates, metal chelators, natural products, etc. Preferably, the organic groups of R⁴, R⁵, R⁶, and R⁷ are each independently a C₁-C_{10,000} organic group, more preferably, C₁-C₆₀₀₀ organic group, even more preferably C₁-C₁₀₀₀ organic group, and most preferably, C₁-C₅₀₀ organic group, encompassing antibodies, nucleic acids, peptides, proteins, carbohydrates, metal chelators, fluoresent tags, enzymes, solid supports, etc. Preferably, the organic group of R³, R⁸, and R⁹ are each independently a C₁-C₂₀ organic group, more preferably, C₁-C₁₀ alkyl group, and most preferably C₁-C₃ alkyl moiety.

The methods of this invention can be employed to generate libraries of multivalent arrays including libraries in which the multivalent arrays have formulas VII, VIII and IX In a given library, the component arrays (library members) span a selected range of structural variation. For example, in a given library all of the member arrays could be synthesized to have approximately the same length and carry different pendant or terminal functional groups. In another example, a library could be constructed with members having selected variation in length with the same pendant or terminal functional groups. In yet another example, library, members could be designed to span a range of functional group densities and or functional groups distributions. Functional group density is most generally the number of functional groups/polymer, but may represent different distributions of functional groups, e.g., randomly distributed throughout the polymer, in blocks where a defined number of adjacent monomers are substituted with the same functional group, with functional groups spaced at a selected distances from one another, or with different relative positioning and spacing of different functional groups. The methods of this invention allow control of all of polymer length, terminal functionality and functional group type, density and distribution.

Libraries are composed of a plurality of multivalent arrays having different structures that are defined (i.e non random) in at least one structural feature. For example, a library may contain members with defined functional group density (functional groups/monomers), but in which the functional groups are randomly distributed throughout the polymers. A library is typically composed of 10 or more structurally distinguishable multivalent arrays. Preferred libraries are composed of about 50-about 200 structurally distinguishable multivalent arrays.

Libraries are useful for screening, selecting and identifying multivalent arrays having a desired functionality, which may be a biological functionality.

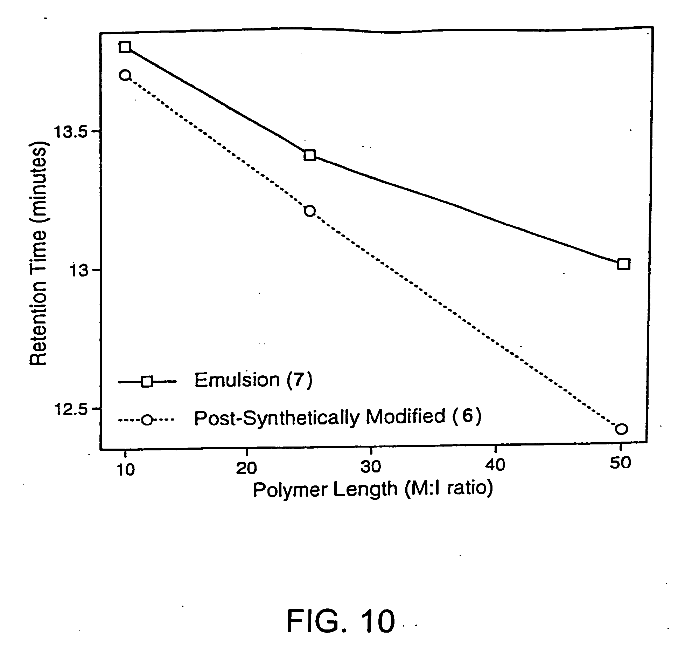

To demonstrate the utility of the post-synthetic modification strategy of the method of the present invention, a series of NHS-substituted materials differing in average length (degree of polymerization, DP) using three monomer to initiator ratios (10:1, 25:1, and 50:1) were prepared (Reaction Path A, Figure 2). All polymerization reactions proceeded efficiently, consuming all of the monomer. The mannose epitopes were appended by treatment of the activated oligomer backbones with amine to afford an oligomer series. Analogous materials were generated by the conventional method under emulsion polymerization conditions employing the same monomer to ROMP catalyst ratios (Reaction Path B, Figure 2): No variations in the macroscopic physical properties of the oligomers prepared by the two methods were detected, and no differences were observable by ¹H NMR spectroscopy. These results indicate the PSM procedure is efficient. The relative lengths of the materials generated by each method were assessed using gel permeation chromatography (GPC). The carbohydrate polymers 6 and 7 (Figure 2) were acetylated to convert them into organic soluble derivatives, which can be more easily evaluated by GPC. Analyses of the materials suggested that the polymers generated under emulsion conditions are slightly shorter than those produced by post-polymerization modification (Figure 10). Each method, however, provides a linear correlation between polymer length and monomer to initiator (M:I) ratios, an indication that the polymerization reactions are living. Thus, the PSM protocol according to the present invention can be used to prepare multivalent assemblies varying in length. The GPC data also suggests that the shortest polymers made by each method are with about 3 units length of one another, while the longest polymers are within about 12 units. The discrepancy in the lengths of the emulsion and PSM polymers highlights the differences in physical properties of the monomers that give rise to variations in the polymerization reaction. The new PSM procedure of the present invention is important because a wide range of different recognition elements can be attached to a single scaffold to give rise to materials with identical backbones. Such substances will facilitate the determination of structure/function relationships.

The method of the present invention was further investigated by comparing the biological activity of oligomers derived from the new process to those made by the conventional approach. The mannose-substituted polymers were designed to interact with the well-studied lectin Concanavalin A (Con A) (Goldstein, et al., Carbohydrate Specificity of Concanavalin A; Bittiger, H. and Schnebli, H. P., Ed.; John Wiley & Sons, Ltd.: London, 1976; Coll., pp 55-65). Con A is a homotetramer at pH 7 that can facilitate the agglutination of red blood cells via simultaneous interactions with mannose residues on the surfaces of different cells. The ability of soluble carbohydrate ligands to inhibit cell agglutination can be measured. The efficacies of ROMP-derived oligomers in a Con A inhibition assay depend on their lengths (Kanai et al., J. Am. Chem. Soc., 119, 9931-9932 (1997); and Mann et al., J. Am. Chem. Soc., 120, 10575-10582 (1998)). Hemagglutination assays (Osawa et al., Methods Enzymol., 28, 323-327 (1972)), therefore, provide a convenient format to assess the activities of materials generated from the two distinct preparation methods.

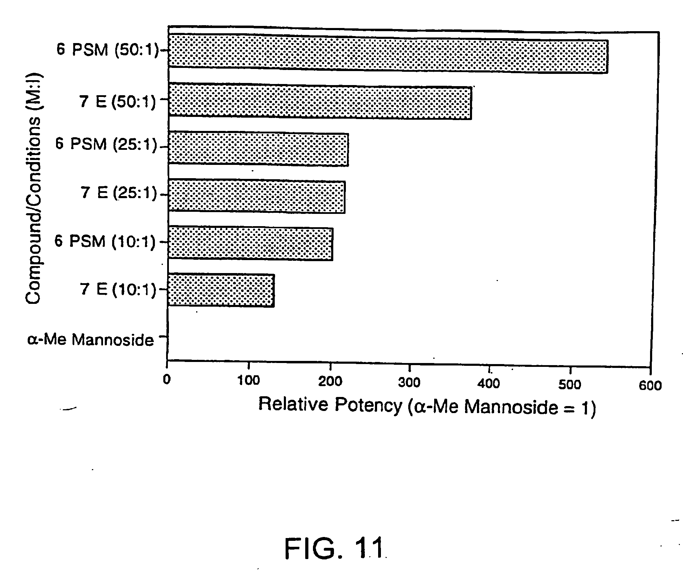

The Con A inhibitory potencies of different materials generated by the conventional and PSM protocols were compared on a saccharide residue basis using monovalent α-methyl mannopyranoside as a standard. Within a single series, either polymers 6 or 7, the most potent oligomers were those produced using a 50:1 monomer to initiator ratio (Figure 11). This result is consistent with previous studies, which revealed that the most potent inhibitors are those that can span two saccharide binding sites on Con A (Kanai et al., J. Am. Chem. Soc., 119, 9931-9932 (1997); and Mann et al., J. Am Chem. Soc., 120, 10575-10582 (1998)). At each M:I ratio, the PSM oligomers were slightly more active than those prepared under emulsion conditions. For example, a 400-fold increase over α-methyl mannopyranoside was seen for the polymer derived from the 50:1 monomer-to-initiator ratio in the emulsion polymerization, but an enhancement of 550-fold was found for the related material made under post-polymerization modification conditions. The magnitude of effects seen with the previously studied norbornene imide mannose polymers was greater than those seen here. The present results are similar to those seen for the reduced norbornene imide mannose polymers. This may be due to a higher entropic cost in the orientation of the current backbone, which is less rigid than the bicyclic norbornene imide template. Because longer oligomers are more active inhibitors, this finding is consistent with the GPC data that indicates the average length of the PSM oligomer exceeds that of the material generated under the emulsion polymerization conditions. Overall, these data indicate that the PSM protocol can be used to synthesize biologically active materials with potencies that match or surpass those resulting from substances generated by standard ROMP approaches.

To test the strategy for introducing terminal functionality, the bifunctional capping agent 18 (Figure 12) was designed to incorporate a masked carboxylic acid onto the end of living polymer chains. The target molecule was comprised of an enol ether linked to a protected carboxylic acid via an ethylene glycol linker. The β-trimethylsilyl (TMS) ethyl carboxylic acid protecting group serves two purposes. First, the distinct signal of the TMS group in the ¹H NMR spectrum provides an estimate of the capping efficiency; and second, the β-TMS ethyl group can be removed under conditions that do not affect the sulfated carbohydrate recognition epitopes employed in this study. Moreover, carboxylic acids can be activated for further functionalization easily, selectively, and with high efficiency. The target capping agent 18 could be readily assembled from triethylene glycol in six steps.

The ability of enol ether 18 to terminate ROMP reactions was evaluated in reactions of three monomers with different properties. To ascertain the reactivity of 18 under standard conditions, non-polar monomer 11 was subjected to ROMP, and an excess of compound 18 was introduced to terminate the reaction (Figure 12). From ¹H NMR data, comparison of the integration of the phenyl protons incorporated from the catalyst with that of the protons from the TMS group revealed that approximately 80% of the resulting polymer chains were capped to afford material 19. Initial attempts to end-label polymers bearing highly polar substituents revealed that the capping reaction was less effective for these substrates. Specifically, when the emulsion conditions required for oligomerization of polar compound 13 were used, reaction termination with enol ether 18 resulted in 21a, which was produced with a useful but more modest capping efficiency (30%) (Figure 12). To minimize complications arising from phase transfer processes, an alternative strategy to generate polar, functionalized polymer 21b was used. Polymers containing N-hydroxysuccinimide esters, such as 20, can be assembled in organic solvents using ROMP. Subsequent post-polymerization modification by treatment of the resulting materials with a nucleophile generates a new substituted polymer. As with products from reaction of methyl ester 11, polymer 20 obtained from reaction of 13 can be terminated with capping agent 18 in efficiencies of approximately 80%. Polymer 20 could then be coupled to an amine-containing saccharide moiety to afford the 3,6-disulfogalactose derivative **21b.** After purification of material **21b,** the NMR spectroscopic data polymers **21a** and **21b** were virtually indistinguishable except for differences in the intensities of the signals arising from the capping agent. It is believed that the single phase, homogenous reaction conditions result in higher capping yields than do the emulsion polymerization conditions because the solubilities of the starting materials and products strongly influence the relative rates of various steps in polymer assembly and termination.

The importance of multivalent recognition events in biology and the utility of multivalent arrays in elucidating the features of such processes have accelerated the development of synthetic methods to generate multidentate ligands equipped with reporter groups. For example, acrylamide copolymerization can incorporate saccharide recognition elements and reporter groups, and this strategy has been used to develop materials for assaying protein-carbohydrate interactions. Alternatively, polymers possessing reporter groups have been generated by coupling a desired functional tag to a preformed polymer backbone, either using a single equivalent of the tag or by attaching a reporter group to each monomer prior to coupling to the multivalent scaffold. None of the reported synthetic routes allow for control over the length of the polymer chain or the number of reporter groups incorporated in the multivalent array.

In addition to adding an electron rich alkene, the polymer chain can be capped with a functional group via oxidation of the terminal metal carbene. For example, exposure of polymers in which the active metal carbene center is present at the end of the growing chain to oxygen results in a terminal aldehyde on the polymer chain. This strategy was explored in parallel to the method just described with enol ether **11.** The sulfated galactose monomer **23** was subjected to the ROMP catalyst **14** and following consumption of the monomer, the reaction was opened to air to yield polymer **25** (Figure 8). This approach relies on efficient capping with oxygen and subsequent hydrazone, hydrazide, or hydroxyl amine formation. This method uses fewer steps to obtain the final product; however, the capping efficiency is more difficult to monitor than in the case of polymers **19, 20** and **21a** and **21b.**

To demonstrate the utility of the synthetic scheme of the present invention for selective incorporation of a single reporter, end-labeled neoglycopolymers were coupled to a fluorescent reporter group through the end-label. These fluorescent neoglycopolymers were designed to allow studies of the interactions of the polymers with cell surface L-selectin.

L-selectin, a member of the selectin family of cell adhesion molecules, facilitates the recruitment of white blood cells to sites of tissue damage. Certain sulfated, saccharide-containing neoglycopolymers related to **21a** are potent inhibitors of selectin function. It is believed that these neoglycopolymers inhibit protein function by binding to L-selectin on the cell surface. By transforming **21a** and **25** into reporter ligands **22** and **27** respectively, neoglycopolymer binding to cell surface L-selectin could be directly investigated.

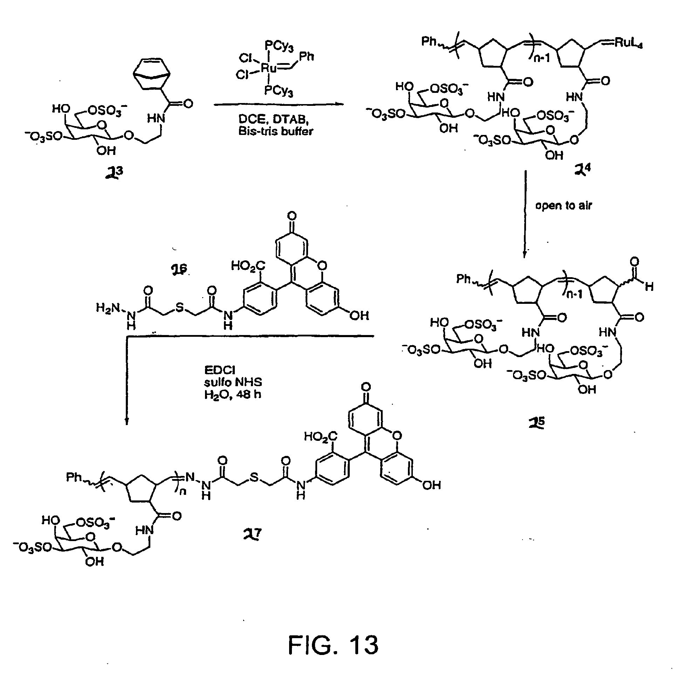

The initial step in the generation of **22** involved unmasking the carboxylic acid by saponification of the β-trimethylsilyl ethyl ester (Figure 12). A fluorescein derivative (5-((5-aminopentyl)thioureidyl) fluorescein or fluorescein cadaverine) was attached through amide bond formation. The resulting conjugate was isolated by size exclusion and cation exchange chromatography to afford fluorescein-modified oligomer **22.** Polymer **25** could be directly subjected to 5-(((2-(carbohydrazino)methyl)thio)acetyl)aminofluorescein), a hydrazine fluorescein derivative, **26,** to yield the desired fluorescent tagged polymer **27** (Figure 13).

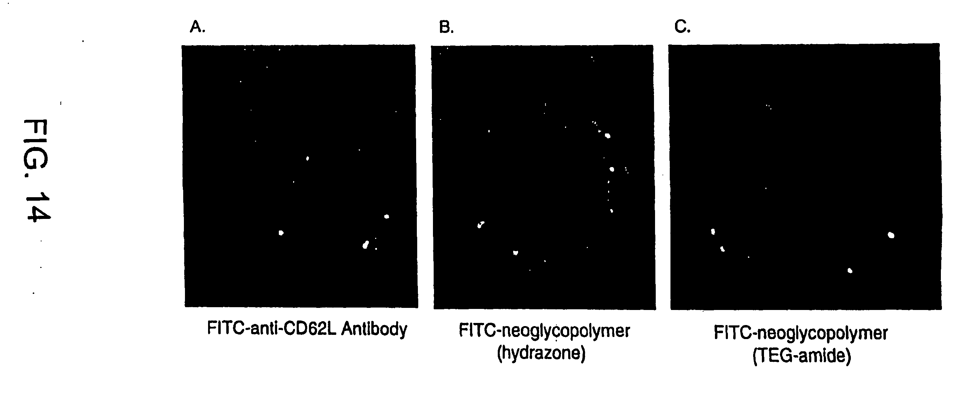

The ability of polymers **22** and **27** to bind Jurkat cells (a human acute T cell leukemia line) displaying L-selectin was examined using fluorescence microscopy (Figure 12). For comparison, cells were labeled with a fluorescein-conjugated antibody to L-selectin. Both the antibody and the polymer bound cells at localized sites, producing similar, punctate fluorescence patterns. The observed patterns are consistent with observations that L-selectin is not randomly distributed on the leukocyte surface but is localized to specific regions of the cell termed microvilli. The binding was dependent on the presence of cell surface L-selectin, as neither the fluorescent polymer nor anti-L-selectin antibody was observed to bind to L-selectin deficient cells (an HL60 cell line, data not shown). Similar results were seen using the aldehyde capped polymer **27** (Figure 14).

These results suggest that neoglycopolymers bind specifically to L-selectin on the cell surface. One would expect general cell surface staining if ligand **22** was binding nonspecifically. Moreover, further microscopy studies suggest that the significant biological activities of these glycoprotein mimics are mediated through multivalent contacts. This data highlights the utility of probes **22** and **27** for visualizing cell surface recognition events.

Objects and advantages of this invention are further illustrated by the following examples, but the particular materials and amounts thereof recited in these examples, as well as other conditions and details, should not be construed to unduly limit this invention.

### EXAMPLES

*Materials:* Bis(tricyclohexylphosphine)benzylidene ruthenium(IV)dichloride was obtained from Strem Chemicals, Inc. (Newburyport, MA). 5-((5-aminopentyl)thioureidyl) fluorescein (fluorescein cadaverine) was purchased from Molecular Probes (Eugene, OR). Cell culture media RPMI 1640 and fetal calf serum were from Gibco BRL (Gaithersburg, MD). Penicillin, streptomycin, L-glutamine, and sodium pyruvate were from Sigma (St. Louis, MO). Fluorescein-labeled anti L-selectin antibody (DREG-56) was purchased from Pharmingen (San Diego, CA). VectaShield was from Vector Laboratories (Burlingame, CA). All other reagents were purchased from Aldrich Chemical Co., Milwaukee, WI, unless otherwise specified. All solvents were purchased either from Aldrich Chemical Co., or Fisher Scientific, Pittsburgh, PA.

*General Methods:* All nonaqueous reactions were carried out in oven-dried glassware under a nitrogen atmosphere. Reaction solvents were distilled from sodium/benzophenone (tetrahydrofuran), calcium hydride (dichloromethane, triethylamine, dichloroethane), or under reduced pressure over type 4Å molecular sieves (DMSO). ACS grade 1,2-dichloroethane (DCE) was used as received from Aldrich Chemical Co., Milwaukee, WI. Solvents used in polymerization reactions were deoxygenated with a minimum of three freeze-pump-thaw cycles prior to use. Distilled, deionized (dd or MQ) water and 500 MWCO dialysis tubing (Fisher Scientific, Pittsburgh, PA) were used for the polymer purification. Chromatography solvents were ACS grade; dichloromethane, acetone and hexanes were distilled. Dodecyltrimethylammonium bromide (DTAB) was recrystallized from acetone. Reactions were monitored by thin-layer chromatography (TLC) on 0.25 mm precoated Merck Silica Gel 60 F₂₅₄ (VWR Scientific, So. Plainfield, NJ), visualizing with ultra violet light, *p-*anisaldehyde stain (15 ml *p*-anisaldehyde, 10 ml acetic acid, 10 ml sulfuric acid, 350 ml ethanol), or potassium permanganate stain (3 grams KMnO₄, 20 grams K₂CO₃,5 ml of 5% aqueous NaOH, 200 ml water). Flash column chromatography was performed on Merck Silica Gel 60 (230-400 mesh, Scientific Adsorbents Inc., Atlanta, GA) using distilled reagent grade hexanes and dichloromethane and ACS grade ethyl acetate, methanol, and chloroform. When handling acid-sensitive compounds, chloroform and dichloromethane were neutralized by filtration through basic alumina immediately prior to use. Infrared spectra were recorded on a Mattson FTIR spectrometer. Mass spectral data were obtained by Liquid Secondary Ion Mass Spectrometry (LSIMS) on a Micromass Autospec Mass Spectrometer (3-nitrobenzoic acid with added sodium iodide (3-NBA + NaI) matrix). ¹H and ¹³C NMR spectra were recorded on a Bruker AC-300 spectrometer and are referenced to residual solvent peaks (CDCl₃: ¹H: δ 7.24, ¹³C: δ 77.0; D₂O: ¹H: δ 4.67) or to an internal reference of tetramethylsilane in CDCl₃ (¹H: δ 0.00). NMR solvents were obtained from Cambridge Isotope Laboratories, Inc., Andover, MA. ¹H-¹H couplings are assumed to be first order, and peak multiplicity is reported as s (singlet), d (doublet), t (triplet), q (quartet), m (multiplet), or b (broad).

Preparation of Bicyclo[2.2.1]hept-5-ene-*exo*-2-carboxylic acid *N-*hydroxysuccinimide ester, Compound 1 in Figure 2: Norbornene acid (151.8 mg, 1.1 mmol, prepared according to the method of Ver Nooy et al., J. Am. Chem. Soc., 77, 3583-3586 (1955)), *N-*hydroxysuccinimide (172.5 mg, 1.49 mmol, obtained from Aldrich), and EDCI (1-(3-dimethylaminopropyl)-3-ethylcarbodiimide hydrochloride, 278.1 mg, 1.45 mmol, obtained from Aldrich) were stirred in CH₂Cl₂ (3.6 mL, obtained from Aldrich) overnight under nitrogen. The solvent was removed under reduced pressure and the residue was subjected to flash silica gel chromatography with CH₂Cl₂ as the solvent according to the procedure of Still, J. Org. Chem., 43, 2923 (1978). A white solid was isolated (186.7 mg, 0.88 mmol). Yield 80%. ¹H NMR (300 MHz, CDCl₃): δ 6.19 (dd, *J*=5.7, 2.9 Hz, 1H), 6.17 (dd, *J*=5.7, 3.1 Hz, 1H), 3.25 (br s, 1H), 2.98 (br s, 1H), 2.82 (d, *J*=1.65 Hz, 2H), 2.49 (ddd, *J*=10.48, 4.78, 1.65 Hz, 1H), 2.03 (ddd, *J*=11.95, 4.23, 4.2 Hz, 1H), 1.55-1.41 (m, 3H). El *m*/*z* 235.01847 [235.2395, calc'd for C₁₂ H₁₃ NO₄].

Polymerization of bicyclo[2.2.1] hept-5-ene-*exo*-2-carboxylic acid *N-*hydroxysuccinimide ester, Compound **3** in Figure 2 (n = 10): The *N-*hydroxy ester (98.3 mg, 0.425 mmol) **1** was dissolved in 1,2-dichloroethane (DCE) (2.1 mL). To this was added a solution of [(Cy)₃P]₂Cl₂Ru=CHPh (Strem, Newburyport, NH) in deoxygenated DCE (35 mg in 2.1 mL). The reaction was stirred under nitrogen at room temperature for forty-five minutes. The reaction appeared complete by TLC, and an excess of ethyl vinyl ether was added for capping. The reaction mixture was filtered through a small plug of silica gel using CH₂Cl₂ as eluent The solvent was removed under reduced pressure to afford a brown solid (96.8 mg) that was used without further purification. Yield 98%. ¹H NMR (300 MHz, CDCl₃): δ 7.3 (m), 5.7-5.2 (m), 3.5-0.90 (br m).

Preparation of aminoethyl-a-D-mannopyranoside, Compound **4,** Figure 2: The azidoethyl mannoside was prepared according to the procedure of Chernyak et al., Carbohyd. Res., 223, 303-309 (1992) with minor modifications. Azidoethanol was substituted for allyl alcohol and glycosylation conditions were used as described by Lee et al., Carbohyd. Res., 37, 193-201 (1974). The azidoethyl mannoside was reduced with Pearlmann's catalyst (Aldrich) in a 1:1 mixture of methanol:water (a modification of a procedure mentioned above) to give **4.**

Preparation of aminoethyl-α-D-mannopyranosyl bicyclo[2.2.1]hept-5-ene-*exo*-2-carboxamide, Compound **5,** Figure 2: The mannose monomer **5** was prepared via the pentafluorophenyl ester and Compound **4** by a procedure previously described in Manning et al., Tetrahedron, 53, 11937-11952 (1997). ¹H NMR (300 NHz, D₂O): δ 6.19 (dd, *J*=5.7, 2.9 Hz, 1H), 4.694 (d, *J*=1.65 Hz, 1H), 3.76 (dd, *J*=2.94, 1.83, 1H), 3.70 (dt, *J*=12.32, 1.9 Hz, 1H), 3.64-3.41 (m, 6H), 3.29 (br m, 1H), 2.76 (br m, 1H), 2.03 (m, IH), 1.57 (m, 1H), 1.35-1.17 (m, 3H). EI *m*/*z* 343.1627 [343.377, calc'd for C₁₆ H₂₅NO₇].

Coupling to product of the polymerization of bicyclo[2.2.1]hept-5-ene-*exo*-2-carboxylic acid *N-*hydroxysuccinimide ester, Compound **6** in Figure 2 (n =10): Aminoethyl mannoside **4** (16.0 mg, 0.0788 mmol), *N-*methylmorpholine (7.7 µL, 0.0702 mmol, Aldrich) and polymer **3** (n = 10, 15.2 mg, 0.0647 mmol) in 0.35 mL dimethyl formamide (DMF) were stirred for 24 hours. Diisopropylcarbodiimide (DIC, 11 µL, 0.0638 mmol, Aldrich) was added and stirring continued overnight. The DMF was removed under reduced pressure, and the resulting solid was washed three times with 1-2 mL of CH₂Cl₂ and three times with 1-2 mL of ethanol. The solid was dried, and (trimethylsilyl) diazomethane (TMSCHN₂, 35 µL, 0.0702 mmol, Aldrich) and methanol (350 µL) were added and the reaction stirred overnight. The reaction was quenched upon addition of water, and the solvent was removed under reduced pressure. The solid was dissolved in MQ water and placed in dialysis tubing. The sample was dialyzed (48 hours, four water changes, 1 L each time) to remove impurities from the coupling reaction and unreacted **4.** The solution was filtered through a 0.25 micron filter and the solvent was removed under reduced pressure to give a tan solid (15.4 mg, 71%). ¹H NMR (300 MHz, D₂O): δ 7.3 (br m, 0.278 H), 5.5-4.9 (br, 2 H), 4.0-3.0 (br m, 14 H), 2.5-2.15 (br m, 2 H), 1.9-1.4 (br, 2 H), 1.1-0.9 (br, 2H).

Polymerization of aminoethyl α-D-mannopyranosyl bicyclo[2.2.1]hept-5-ene-*exo*-2-carboxamide, Compound **7** in Figure 2 (n = 10): The mannose monomer **5** (19.6 mg, 0.0571 mmol) and DTAB (dodecyltrimethylammonium bromide, 29 mg, 0.0933 mmol, Aldrich) were dissolved in water (182 µL) and degassed. DCE (181 µL) was added to the ruthenium catalyst **2** (6.1 mg) and this solution (91 µL corresponding to 4.7 mg, 0.00571 mmol of **2**) was added to the solution of **5.** The reaction was stirred at room temperature for thirty minutes and then was heated to 60°C for 4 hours. Once the reaction was complete by TLC, an excess of ethyl vinyl ether was added to quench the active carbene. The reaction mixture was evaporated under reduced pressure, and the solid was washed with dichloromethane and ethanol. The polymer was dissolved in MQ water and dialyzed against 1 L of water for 2 days, changing the water every 12 hours. The solution was removed from the dialysis tubing and filtered through a 0.25 micron filter which after removal of the solvent under reduced pressure gave a tan solid (18.2 mg). Yield 90%. ¹H NMR (300 MHz, D₂O): δ 7.3 (br m, 0.238 H), 5.5-4.9 (br, 2 H), 4.0-3.0 (br m, 14 H), 2.5-2.15 (br m, 2 H), 1.9-1.4 (br, 2 H), 1.1-0.9 (br, 1H).

### Synthesis of the capping agent on solid support (Figure 8B-I).

- 4-pentenoic acid (1.0 mL, 9.8 mmol, 1 eq), K₂CO₃ (6.78 g, 49 mmol, 5 eq), benzyl bromide (1.4 mL, 11.8 mmol, 1.2 eq), and tetrabutylammonium iodide (0.254 g, 0.686 mmol, 0.07 eq were combined in approximately 50 mL of dry acetone. The reaction was stirred under nitrogen for 3 hours. TLC (9:1 hexanes/ethyl acetate) showed no more starting material. The reaction was filtered and the solvent was removed under reduced pressure. The residue was dissolved in ethyl acetate and washed sequentially with 1M HCl, saturated NaHCO₃, and brine. The organic layer was dried with MgSO₄ and concentrated under reduced pressure. Flash chromatography, using a solvent of 30:1 hexanes/ethyl acetate (until benzyl bromide eluted) to 1:1 hexanes/ethyl acetate, was used to isolate the product. (1.8 g, 9.5 mmol, 97% yield).

Benzyl 4-pentenoate (1.86 g, 9.8 mmol, 1 eq) was added to approximately 50 mL CH₂Cl₂ and cooled to -78°C. Nitrogen was bubbled through the solution for about 20 minutes. Then ozone was bubbled through until the solution turned pale blue, indicating excess ozone. Nitrogen was bubbled through the solution for 5 minutes, and then triphenyl phosphine (6 g, 22.5 mmol, 2.3 eq) was added to the flask. The mixture was stirred for approximately 30 minutes. The cold bath was removed and the cloudy solution became clear as the reaction warmed to room temperature. TLC (2:1 hexanes/ethyl acetate) indicated no starting material. A gradient column (hexanes until triphenyl phosphine eluted, and then a gradient of 9:1 hexanes/ethyl acetate to 6:1 hexanes/ethyl acetate) was used to isolate the product (1.7 g, 9.1 mmol, 93% yield).

Ph₃PCH₂OMeCl (6.24 g,18.2 mmol, 2 eq) was azeotroped with toluene to remove water. Anhydrous ether was added to a flask with Ph₃PCH₂OMeCl, and the solution was cooled in an ice bath. 95% potassium t-butoxide (1.94 g, 16.4 mmol, 1.8 eq) was added, and the solution was stirred for 5 minutes while maintaining a red color. A solution of β-Formylpropionsaeure-benzylester (1.7 g, 9.1 mmol, 1 eq) in ether was added dropwise over about 5 minutes. The solution turned orange, and the reaction was done by TLC (9:1 hexanes/ethyl acetate) after 30 minutes of stirring in an ice bath. Brine was added and the reaction was stirred for another 5 minutes at room temperature. The phases were separated and the aqueous layer was extracted three times with ether. The ether layers were combined, dried with MgSO₄, and concentrated under educed pressure. Flash chromatography using a gradient of 30:1 hexanes/ethyl acetate to 20:1 hexanes/ethyl acetate yielded the product. (0.65 g, 2.9 mmol, 32% yield).

Benzyl 5-methoxy-4-pentenoate (70 mg, 0.318 mmol, 1eq) was dissolved in THF. A 0.5 mM solution of aqueous KOH (0.76 mL, 0.382 mmol, 1.2 eq) was added and the reaction was stirred for 1 hour. TLC (9:1 hexanes/ethyl acetate) indicated no starting material. The product potassium salt was obtained (27.9 mg, 0.214 mmol, 67% yield). The salt was dissolved in methanol, and Amberlyst 15 strongly acidic resin was added to neutralize the solution. The reaction was filtered and the methanol was concentrated under reduced pressure to yield the desired product. (24.7 mg, 0.19 mmol, 89% yield).

Amberlyst 15 strongly acidic resin was prepared by washing with each of the following solvents twice in the following order: methanol, water, 1 M NaOH, water, ethanol, 6 M HCl, water, ethanol, methanol.

Hydroxyethyl-Photoliker NovaSyn TG resin (0.26 mmol/g resin loading, 30 mg, 0.0078 mmol, 1 eq), 5-methoxy-4-pentenoic acid (1.8 mg, 0.0135 mmol, 1.7 eq), diisopropylcarbodiimide (2.5 µL, 0.0162 mmol, 2.1 eq), and DMAP (0.5 mg, 0.0045 mmol, 0.6 eq) were mixed in 0.5 mL amine-free DMF. The reaction was protected from light and stirred for 4 days. A spot test for free hydroxyl groups was used to determine conjugation efficiency (Kuisle, O.; Lolo, M.; Quinoa, E.; Riguera, R. Tetrahedron,55, 14807-14812.(1999)). Resin (approximately 1 mg) was removed from the reaction by pipet and placed on a TLC plate. A 0.03 M p-TsCl solution in toluene (2 drops) and a 0.075 M 4-*p-*nitrobenzylpyridine solution in toluene (2 drops) was added. The plate was heated until the orange color completely disappeared. A 10% piperidine solution in CHCl, (2 drops) was added and the plate was dried. There was no development of violet or pink color, indicating the reaction was complete. The resin was washed with methylene chloride and ethanol several times and recovered (27 mg).

Hemagglutination Assay: This assay was performed as previously described in Kanai et al, J. Am. Chem. Soc., 119, 9931-9932 (1997) and references therein. The concentrations of the polymer samples used in the assay were determined by ¹H NMR integration of the peak at 5.25 ppm with an external sample of NaOAc of known concentration.

### Synthesis of Bifunctional Capping Agent 18

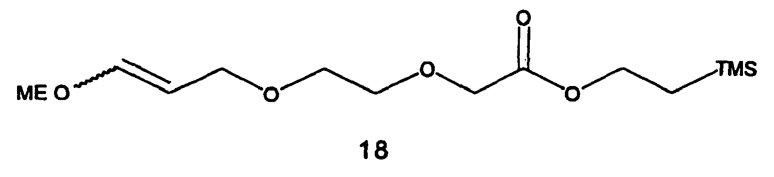

### 2-(2-(2-benzyloxy)ethoxy)ethoxy)ethanol

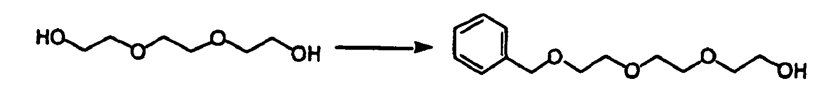

Benzyl bromide (7.9 mL, 66.6 mmol) was added to a solution of triethylene glycol (8.9 mL, 66.6 mmol) in 50% aqueous NaOH (5.3 mL), and the mixture was stirred at room temperature for 24 hours. The reaction was diluted with H₂O (75 mL) and extracted with Et₂O (4 x 100 mL). The combined organic extracts were dried over Na₂SO₄, concentrated, and purified by flash column chromatography (silica, EtOAc), affording 2-(2-(2-benzyloxy)thoxy)thoxy)ethanol (6.14 g, 38%). R*_{ƒ}*= 0.6 (EtOAc); IR (neat): 3500-3400, 2900-2700, 1751, 1633, 1613, 1453, 1349, 1246, 1100, 1069 cm⁻¹; ¹H NMR (300 MHz, CDCl₃): δ 7.35-7.26 (m, 5H), 4.57 (s, 2H), 3.73-3.59 (m, 12H), 2.50 (b, 1H); ¹³C NMR (75 MHz, CDCl₃): δ 138.1, 128.4, 127.8, 127.7, 73.3, 72.6, 70.7, 70.6, 70.4, 69.4, 61.7.

### 10-Phenyl-3,6,9-trioxadecanoic acid

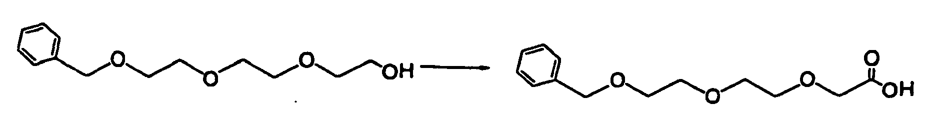

Chromium trioxide (3.33 g, 33.30 mmol) was added to 1.5 M H₂SO₄ (4.4 mL) at 0°C. A solution of 2-(2-(2-benzyloxy)ethoxy)ethoxy)ethanol (2.00 grams, 8.32 mmol) in acetone (110 mL) was added, and the reaction was stirred for 5 hours at room temperature. The solution was extracted with Et₂O (5 x 100 mL) and the combined extracts were washed with saturated NaCl (3 x 50 mL) and concentrated to a volume of 20 mL. Extraction with 5% NaHCO₃ (2 x 20 mL) was followed by acidification of the aqueous extracts to pH = 2 with concentrated HCl and back extraction of the aqueous solution with Et₂O (3 x 50 mL). The combined organic extracts were washed with saturated NaCl (3 x 20 mL). Concentration provided 10-phenyl-3,6,9-trioxadecanoic acid (1.71 g, 81%). R*_{ƒ}*= 0.1-0.4 (10% MeOH/CH₂Cl₂); IR (neat): 3500, 3453, 2900-2700, 1751,1739,1629, 1614, 1453, 1353, 1245, 1204, 1120, 1100, 1026 cm⁻¹ ; ¹H NMR (300 MHz, CDCl₃): δ 10.06, (b, 1H), 7.35-7.25 (m, 5H), 4.57 (s, 2H), 4.17 (s, 2H), 3.77-3.60 (m, 8H); ¹³C NMR (75 MHz, CDCl₃): δ 138.1, 128.4, 127.8, 127.7, 73.3, 72.6, 70.7, 70.6, 70.4, 69.4, 61.7.

### 10-Phenyl-3,6,9-trioxadecanoic acid 2-(trimethylsilyl)ethyl ester

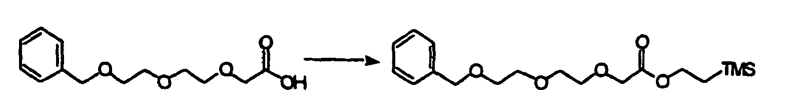

10-Phenyl-3,6,9-trioxadecanoic acid (1.71 g, 6.71 mmol) was dissolved in CH₂Cl₂ (13.4 mL) and the solution was cooled to 0°C. 1-(3-dimethylaminopropyl)-3-ethylcarbodiimide hydrochloride (EDCI) (1.41 g, 7.38 mmol) and *N,N* dimethylaminopyridine (DMAP) (41.0 mg, 0.34 mmol) were added, and the suspension was stirred for 10 minutes at 0 °C. 2-(Trimethylsilyl)ethanol (872.4 mg, 7.38 mmol) was added dropwise via syringe, and the solution was stirred for 20 minutes while warning to room temperature. The reaction was quenched with H₂O and extracted with Et₂O (3 x 50 mL). The combined Et₂O extracts were washed sequentially with 10% HCl (1 x 50 mL), 5% NaHCO₃ (1 x 50 mL), and saturated NaCl (1 x 50 mL), and dried over Na₂SO₄. Concentration followed by flash chromatography (silica, 4:1 hexanes/EtOAc) afforded 10-phenyl-3,6,9-trioxadecanoic acid 2-(trimethylsilyl)ethyl ester (2.32 g, 97% yield). R*_{ƒ}*= 0.26 (4:1 hexanes/EtOAc);IR (neat): 3500-3400, 3000-2700, 1751, 1733, 1615, 1455, 1250, 1148, 1124 cm⁻¹; ¹H NMR (300 MHz, CDCl₃): δ 7.32-7.23 (m, 5H), 4.54 (s, 2H), 4.24-4.18 (m, 2H), 4.10 (s, 2H), 3.72-3.59 (m, 8H), 1.01-0.95 (m, 2H), 0.01 (s, 9H); 13_{C} NMR (75 MHz, CDCl₃): δ 170.5, 138.2, 128.3, 127.6, 127.5, 73.2, 70.8, 70.6, 69.4, 68.8, 63.0, 17.3, -1.6; LRMS (LSIMS, 3-NBA): *m*/*z* 377.2 [M + Na⁺, calc'd for C₁₈H₃₀O₅NaSi 377.5].

### 3,6-Dioxa-8-hydroxy-octanoic acid 2-(trimethylsilyl)ethyl ester

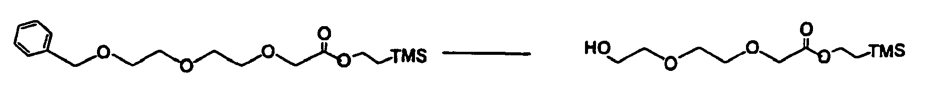

20% Pd(OH)₂/C (100 mg, Aldrich) was added to a solution of 10-phenyl-3,6,9-trioxadecanoic acid 2-trimethylsilyl(ethyl) ester (500 mg, 1.4 mmol) in absolute EtOH (14 mL, AAPER Alcohol and Chemical Co., Shelbyville, KY). The solution was shaken under 50 psi H₂ for 6 hours, filtered through a pad of CELITE (EtOH eluent), and concentrated under reduced pressure to afford 3,6-dioxa-8-hydroxy-octanoic acid 2-trimethylsilyl(ethyl) ester (284.4 mg, 77%). R*_{ƒ}*= 0.29 (2:1 EtOAc/hexanes); IR (neat): 3500-3400, 2952, 2894, 2872, 1750, 1629, 1615, 1456, 1428, 1250, 1200, 1148, 1124, 1064 cm⁻¹; ¹H NMR (300 MHz, CDCl₃): δ 4.26-4.19 (m, 2H), 4.11 (s, 2H), 3.75-3.59 (m, 8H), 2.65 (b, 1H), 1.02-0.95 (m, 2H), 0.02 (s, 9H); ¹³C NMR (75 MHz, CDCl₃): δ 170.6, 72.4, 70.8, 70.2, 68.6, 63.2, 61.5, 17.3, -1.6; LRMS (LSIMS, 3-NBA): *m*/*z* 287.1 [M + Na⁺, calc'd for C₁₁H₂₄O₅NaSi 287.4].

### 3, 6-Dioxa-8-al-octanoic acid 2-(trimethylsilyl)ethyl ester

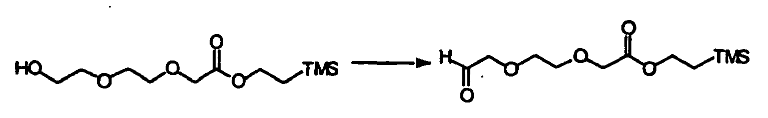

3,6-Dioxa-8-hydroxy-octanoic acid 2-trimethylsilyl(ethyl) ester (250 mg, 0.95 mmol) was dissolved in CH₂Cl₂ (4.7mL) and the solution was cooled to 0°C. Dimethyl sulfoxide (135 pL, 1.9 mmol) was added via syringe, followed by the rapid addition of solid P₂O₅. After 30 minutes at 0°C, Et₃N (460 µL, 3.3 mmol) was added and the reaction was stirred for 30 min at 0°C. The reaction was quenched with 10% HCl (10 mL) and extracted with CH₂Cl₂ (3 x 20 mL). The combined organic extracts were washed with H₂O (1 x 25 mL) and saturated NaCl (1 x 25 mL), and dried over Na₂SO₄. Purification by flash chromatography (silica, 1:1 hexanes/EtOAc) afforded the product (216.0 mg, 82%). R*_{ƒ}*= 0.29 (1:1 hexanes/EtOAc); IR (neat): 3500-3400, 2957, 2922, 2854, 1749, 1734, 1646, 1456, 1260, 1098 cm⁻¹; ¹H NMR (300 MHz, CDCl₃): δ 9.71 (s, 1H), 4.25-4.19 (m, 2H), 4.16 (d, *J*= 0.7 Hz, 2H), 4.10 (s, 2H), 3.75 (s, 4H), 1.01-0.96 (m, 2H), 0.02 (s, 9H); ¹³C NMR (75 MHz, CDCl₃): δ 200.6, 170.4, 76.8, 71.2, 71.0, 68.8, 63.2, 17.4, -1.5; LRMS (LSIMS, 3-NBA): *m*/*z* 285.1 [M + Na⁺, calc'd for C₁₁H₂₂O₅NaSi 285.4].

### 3,6,10-Trioxa-8,9-ene-undecanoic acid 2-(trimethylsilyl)ethyl ester

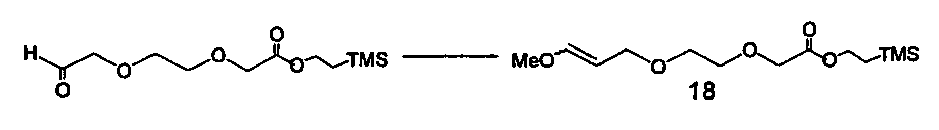

Potassium *tert*-butoxide (36.3 mg, 0.30 mmol) was added to a suspension of (methoxymethyl)triphenylphosphonium chloride (117.6 mg, 0.34 mmol) in THF (2.0 mL) at 0°C. The dark red solution was stirred at 0°C for 5 minutes. 3,6-dioxa-8-al-octanoic acid 2-trimethylsilyl(ethyl) ester (42.5 mg, 0.16 mmol) was added dropwise as a 1M solution in THF (160 µL), during which the solution turned from dark red to pale yellow. The reaction was quenched with saturated NaCl (5 mL) and extracted with Et₂O (3 x 15 mL). The combined Et₂O extracts were washed with H₂O (1 x 20 mL) and dried over Na₂SO₄. Concentration followed by flash chromatography (silica, 9:2 hexanes/EtOAc) afforded 3,6,10-trioxa-8,9-ene-undecanoic acid 2-trimethylsilyl(ethyl) ester **18** (27.9 mg, 59%). R*_{ƒ}*= 0.21 (5:1 hexanes/EtOAc); IR (neat): 2952, 2932, 2898, 2860, 1752, 1732, 1660, 1457, 1251, 1214, 1197, 1176, 1147, 1102, 859, 838 cm⁻¹; ¹H NMR (500 MHz, CDCl₃): δ 6.52 (d, *J* = 13.1 Hz, 1H), 6.00 (dt, *J*= 6.5, 1.1 Hz, 1H), 4.87 (dt, *J* = 12.5, 7.5 Hz, 1H), 4.53 (td, *J*= 7.0, 6.5 Hz, 1H), 4.24-4.17 (m, 4H), 4.10 (s, 2H), 4.09 (s, 2H), 4.07 (dd, *J* = 7.3, 1.2 Hz, 2H), 3.92 (dd, *J* = 7.4, 0.9 Hz, 2H), 3.71-3.54 (m, 8H), 3.58 (s, 3H), 3.53 (s, 3H), 1.01-0.94 (m, 4H), 0.01 (s, 18H); ¹³C NMR (75 MHz, CDCl₃): δ 170.6, 170.5, 151.5, 149.1, 102.7, 98.7, 70.9, 70.9, 69.0, 68.8, 68.7, 68.5, 63.8, 63.0, 59.8, 55.9, 17.4, -1.6; LRMS (LSIMS, 3-NBA): *m*/*z* 313.2 [M + Na⁺, calc'd for C₁₃H₂₆O₅NaSi 313.4].

### Synthesis of Polymer 9

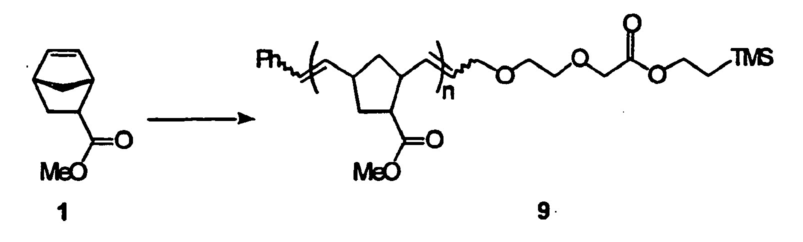

1,2-Dichloroethane (DCE) was deoxygenated by four freeze-pump-thaw (FPT) cycles. A solution of ruthenium catalyst **14** in DCE (100 µL) was added to a solution of norbornene monomer **11** (15 mg, 0.10 mmol) in DCE (400 µL). The red mixture was stirred for 30 minutes at room temperature. Capping agent **18** (30 µL) was added neat, and the reaction was stirred at room temperature for 18 hours. The mixture was concentrated, dissolved in a small amount of CH₂Cl₂ and filtered through a short pad of silica gel to remove excess capping agent **18.** The remaining material was eluted from the silica gel with EtOAc, and the solution was concentrated and dried. The clear, solid material was washed with hexanes (3x) and dried to afford polymer **19** (9.6 mg, 64%).

### Synthesis of Polymer 20

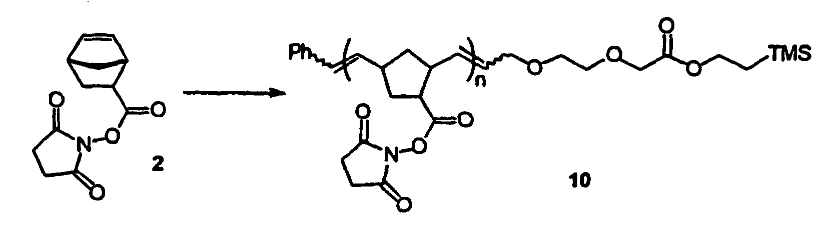

DCE was deoxygenated by four freeze-pump-thaw cycles. A solution of ruthenium catalyst **14** (3.3 mg, 0.004 mmol) in DCE (40 µL) was added to a solution of norbornene monomer **12** (15 mg, 0.064 mmol) in DCE (280 µL). The mixture was stirred for 30 minutes at room temperature. Capping agent **18** (13.5 µL) was added neat, and the reaction was stirred at room temperature for 18 hours. The mixture was concentrated, dissolved in a small amount of CH₂Cl₂, and filtered through a short pad of silica gel to remove catalyst-derived impurities and excess capping agent. The solution was concentrated under reduced pressure and was used without purification in the coupling to 3,6-disulfo galactose amine.

### Synthesis of Polymer 21b

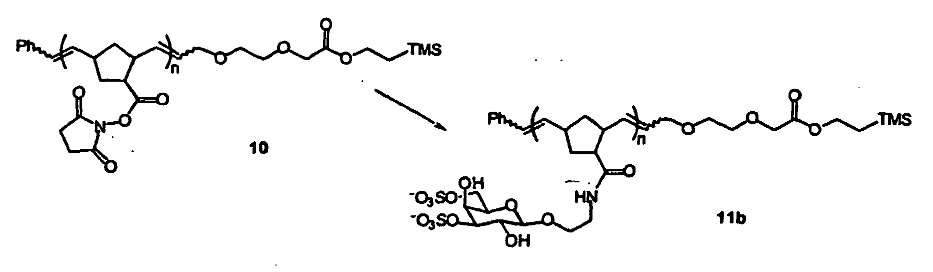

Diisopropylcarbodiimide (DIC) (5 µL, 0.032 mmol) was added to a solution of polymer **20** (7.5 mg) DMF (320 µL), (2-aminoethyl)-3,6-*O*-disulfo-β-D-galactopyranoside (16.7 mg, 0.048 mmol) was added as a 1 M solution in H₂O (48 µL), and Et₃N (8.9 µL, 0.064 mmol) was added. The reaction was stirred at room temperature for approximately 40 hours and then diluted with H₂O (approximately 1 mL). The aqueous solution was extracted with CHCl₃ (3 x 2 mL) and concentrated under reduced pressure. The residue was washed with MeOH (3 x 2 mL), affording neoglycopolymer **21b.**

### Synthesis of Fluorescein-Labeled Neoglycopolymer 22

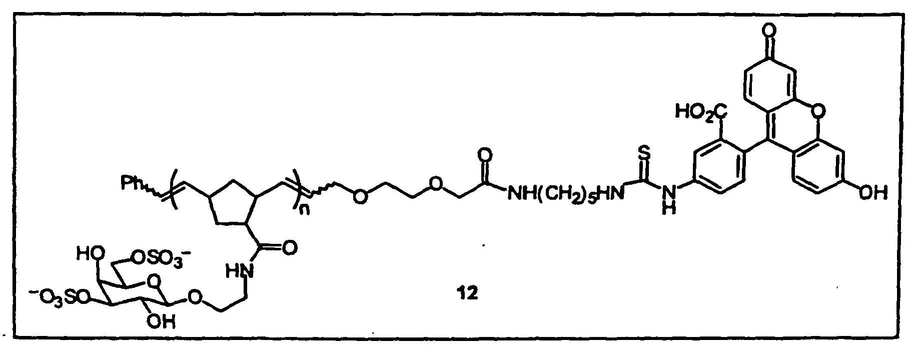

### Synthesis of Polymer 21a

Dichloroethane (DCE) and, in a separate reaction vessel, a solution of the sodium salt of 3,6-disulfo galactose monomer **13** (15 mg, 0.027 mmol), dodecyltrimethyl ammonium bromide (DTAB) (13.5 mg, 0.044 mmol) and 2,2-bis(hydroxymethyl)-2,2',2"-nitrilotriethanol (bis-tris) buffer (91 µL, 100 mM, pH 5.9) were deoxygenated by subjecting each solution to four freeze-pump-thaw (FPT) cycles. The deoxygenated dichloroethane (45 µL) was added to a vial containing ruthenium metal carbene **14** (1.5 mg, 0.0018 mmol) under nitrogen, and the purple solution was added to the reaction vessel containing the buffered solution of monomer and DTAB. The reaction was heated to 40-45°C for 20 minutes, capping agent **18** (10 µL) was added neat, and the mixture was stirred at 40-45°C for 15 minutes. The reaction was allowed to cool to room temperature and stirred for 6 hours. The crude mixture was diluted with H₂O and MeOH until the solution was one phase and the final volume was approcimately 1 mL. The polymer was purified by cation exchange chromatography (SEPHADEX-SP C-25, Pharmacia, Piscataway, NJ; 0.75 x 4.0 cm; Na⁺, H₂O eluent), concentration to dryness, suspension of the residue in MeOH and centrifugation (3x). The MeOH insoluble material was dissolved in H₂O and concentration to dryness afforded capped, polymer **21a** as a light brown, flaky solid in moderate yields (60 - 80%).

### Deprotection of Polymer 21a

Capped polymer **21a** was dissolved in H₂O (95 µL), and 1 M NaOH (5 µL) was added. The flask was fitted with a cold finger, and the solution was heated at 60°C for 2 hours. After cooling to rt, the solution was diluted with H₂O to a final volume of 1 mL and neutralized (AMBERLYST 15 strongly acidic, macroreticular resin, Aldrich). The mixture was filtered through a small plug of glass wool to remove the resin and then concentrated to dryness, affording the deprotected polymer.

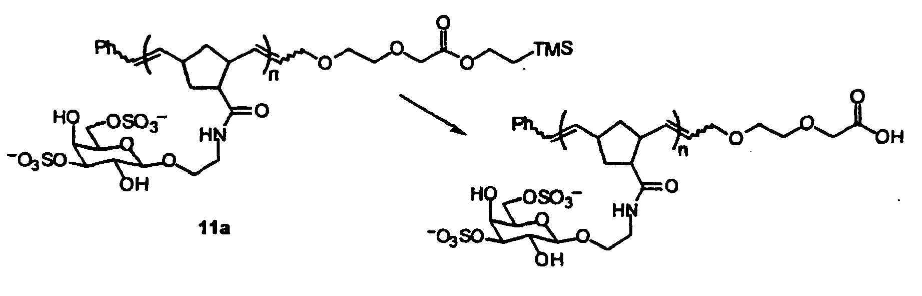

### Synthesis of Conjugate 22

Deprotected polymer (3.2 mg) was dissolved in H₂O (60 µL). EDCI (0.8 mg, 0.004 mmol) and *N*-hydroxysulfosuccinimide (sulfo NHS, Pierce, Roickford, IL) (0.9 mg, 0.004 mmol) were added, and the mixture was incubated at room temperature for 5 minutes. 5-((5-aminopentyl)thioureidyl) fluorescein (fluorescein cadaverine) (1.3 mg, 0.002 mmol) was added and the reaction was stirred at room temperature in the dark for 24 hours. The fluorescein-coupled polymer was purified by cation exchange chromatography (SEPHADEX-SP C-25, Pharmacia; 0.75 x 4.0 cm; Na⁺, H₂O eluent) and size exclusion chromatography (SEPHADEX G-25, Pharmacia, 0.75 x 22.0 cm, H₂O eluent), affording fluorescein-coupled polymer **22** (2.2 mg, 69%).

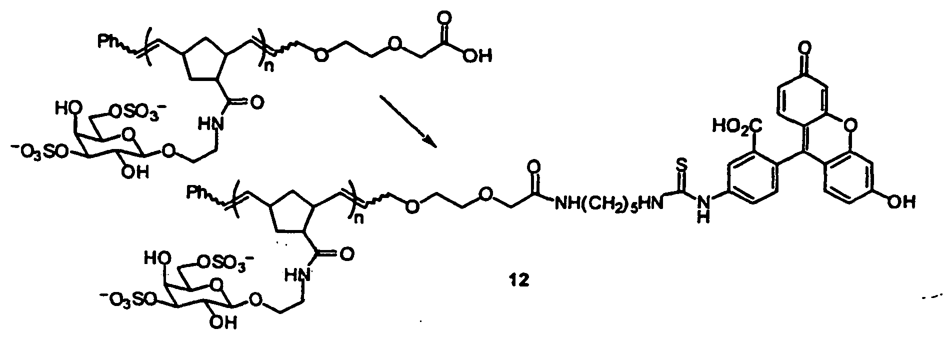

### Synthesis and Modification of Oxygen-terminated polymer 27

DCE and, in a separate reaction vessel, a solution of the sodium salt of 3,6-disulfo galactose monomer **23** (15 mg, 0.027 mmol) and DTAB (13.5 mg, 0.044 mmol) in bis-tris buffer (91 µL, 100 mM, pH 5.9) were deoxygenated by subjecting each solution to four freeze-pump-thaw cycles. The deoxygenated DCE (45 µL) was added to a vial containing the ruthenium carbene **14** (1.5 mg, 0.0018 mmol) under nitrogen, and the purple solution was added to the reaction vessel containing the buffered solution of monomer and DTAB. The reaction was heated to 60°C for 2.5 hours, allowed to cool to room temperature, and then opened to the atmosphere and stirred for 12 hours. S-(((2-(carbohydrazino) methyl)thio)acxtyl)aminofluorescein 26 (Molecular Probes, Eugene, OR, 2.5 mg, 0.0051 1 mmol) was added and the reaction was stirred at room temperature in the dark for 48 hours. The fluorescein-coupled polymer was purified by cation exchange chromatography (SEPHADEX-SP C-25, Pharmacia; 0.75 x 4.0 cm; Na⁺, H₂O eluent) and washing with MeOH (3x), affording fluorescein-coupled polymer **17** (8.6 mg, 57%).

### Fluorescence Microscopy

Jurkat cells were cultured at 37°C and 5% CO₂ in RPMI 1640 with 10% fetal calf serum, 100 U/mL penicillin. 100 µg/mL streptomycin, 2 mM L-glutamine, and 1 mM sodium pyruvate. Cell viability was greater than 95% as determined by staining with 0.4% Trypan Blue. For each experiment, 5 x 10⁵ live cells were used. Jurkat cells were centrifuged at 750 x g for 1 minutes, supernatant culture media was decanted and the cells were resuspended in 1 mL cold PBS. The cells were centrifuged again and resuspended in 100 µL of cold PBS. FITC-labeled anti-L-selectin antibody or fluorescein labeled polymer 22 or fluorescein polymer 17 were-added. The final concentration of the polymer was 4 mM in galactose residues. Cells were incubated at 4°C for 30 minutes and washed twice with 2 mL cold PBS. Cells were fixed in 1 mL of fresh 2% HEPES buffered paraformaldehyde at 4°C for 30 minutes and washed twice with 2 mL cold PBS. Cells were centrifuged and resuspended in 50 mL of cold PBS. The cell solution was then applied to cover slips and mounted on clean glass slides with 5 mL of VectaShield anti-quenching agent. Slides were incubated overnight at 4°C and then viewed under an oil-immersion lens (630x) on a Zeiss Axioskop microscope (Zeiss, Germany) outfitted with a FITC-selective filter and Princeton Instruments MicroMax camera. Images were acquired using IPLab Spectrum software (Signal Analytics Corporation (Vienna, VA)). Images presented are representative of the results obtained from a minimum of 4 independent trials.

Various modifications and alterations to this invention will become apparent to those skilled in the art without departing from the scope of this invention. It should be understood that this invention is not intended to be unduly limited by the illustrative embodiments and examples set forth herein and that such examples and embodiments are presented by way of example only with the scope of the invention intended to be limited only by the claims set forth herein as follows.

## Claims

1. A method of preparing a telechelic polymer, the method comprising:
polymerizing at least one monomer comprising at least one polymerizable group that is polymerized through ring-opening metathesis polymerization in the presence of at least one ruthenium or osmium carbene catalyst to form a polymer; and
combining the polymer with at least one functionalized capping agent that is bifunctional, said capping agent having an electron donating group and at least one of a latent reactive group or a nonreactive functional group, under conditions effective to react the polymer with the capping agent to form a telechelic polymer.

2. The method of claim 1 wherein the functionalized capping agent has the formula: 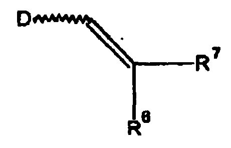 wherein D is the electron donating group and R⁶ and R⁷ are each, independently, H or an organic group, and wherein at least one of R⁶ or R⁷ comprises a latent reactive group or a nonreactive functional group.

3. The method of claim 1 or claim 2 wherein the functionalized capping agent comprises a latent reactive group for subsequent reaction with a functionalizing reagent.

4. The method of claim 2 wherein R⁶ is an organic group that comprises a latent reactive group selected from an azide, a nitro group, a disulfide, a hydrazine, a hydrazide, a hydroxylamine, an aldehyde, a ketone, an epoxide, a cyano group, an acetal, a ketal, a carbamate, a thiocyanate, an activated ester, and an activated acid.

5. The method of claim 1 or claim 2 wherein the functionalized capping agent comprises a nonreactive functional group.

6. The method of claim 2 wherein R⁶ is an organic group that comprises a nonreactive functional group selected from natural products or analogs thereof, metal chelators, metals, fluorescent probes, solid supports, and metal surfaces.

7. The method of claim 1 wherein the functionalized capping agent further comprises a cleavable linker.

8. The method of claim 7 wherein the capping agent comprises a nonreactive functional group.

9. The method of claim 8 wherein the nonreactive functional group is a solid support.

10. The method of claim 9 wherein the functionalized capping agent has the formula: 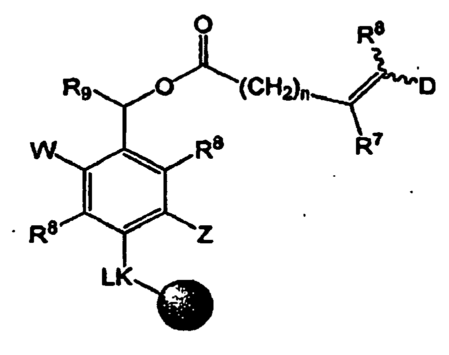 where D is an electron donating group; R⁸, independent of other R⁸ in the functionalized capping agent, is hydrogen or an organic group; n is an integer ranging from 1 to about 20, R⁹ is hydrogen or an organic group; W is an election withdrawing group and Z is an electron donating group and LK is a linker group for attachment to the solid support which is indicated by the sphere, and the dashed line indicates a bond where photochemical cleavage can occur.

11. The method of claim 10 wherein W is an NO₂ group and Z is an OR group where R is an alkyl moiety.

12. The method of any of claims 1-11 wherein the ruthenium or osmium carbene catalyst is functionalized.

13. The method of claim 12 wherein the functionalized carbene catalyst comprises a latent reactive group for subsequent reaction with a functionalizing reagent

14. The method of claim 13 wherein the functionalized carbene is represented by M=CR⁴R⁵, wherein R⁴ is an organic group that includes a latent reactive group, R⁵ is H or an organic group, and M represents ruthenium or osmium in a ligand sphere.

15. The method of claim 14 wherein R⁴ is an organic group that includes a latent reactive group selected from the group of an azide, an epoxide, a cyano group, an acetal, a ketal, a carbamate, a thiocyanate, an activated ester, an activated acid, a hydrazine, and a hydrazone.

16. The method of claim 12 wherein the functionalized carbene has the formula: 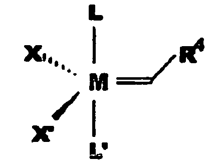 wherein M is Ru or Os, X and X' are each independently an anionic ligand, L and L' are each independently a neutral ligand, and R⁴ is an organic group that includes a latent reactive group selected from the group of an azide, an epoxide, a cyano group, an acetal, a ketal, a carbamate, a thiocyanate, an activated ester, an activated acid, a hydrazine, and a hydrazone.

17. The method of claim 12 wherein the functionalized carbene catalyst comprises a nonreactive functional group.

18. The method of claim 17 wherein the functionalized carbene is represented by M=CR⁴R⁵, wherein R⁴ is an organic group that includes a nonreactive functional group, R⁵ is H or an organic group, and M represents ruthenium or osmium in a ligand sphere.

19. The method of claim 18 wherein R⁴ is an organic group that includes a nonreactive functional group selected from natural products or analogs thereof, metal chelators, metals, fluorescent probes, solid supports, and metal surfaces.

20. The method of claim 17 wherein the functionalized carbene has the following formula: 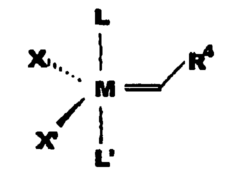 wherein M is Ru or Os, X and X' are independently an anionic ligand, L and L' are independently a neutral ligand, and R⁴ is an organic group that includes a nonreactive functional group selected from natural products or analogs thereof, metal chelators, metals, fluorescent probes, solid supports, or metal surfaces.

21. The method of claim 17 wherein the nonreactive functional group is a solid support.

22. The method of claim 21 wherein the functionalized metal carbene catalyst has the formula: 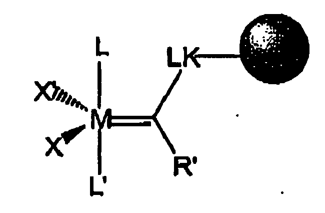 wherein M is Ru or Os, X and X' are independently an anionic ligand and together can form a bidendate anion ligand, L and L' are independently a neutral ligand and together can form a neutral bidentate ligands, R' is hydrogen or an organic group and LK is an optional linker group that is an organic group and the solid support is illustrated as a sphere.

23. The method of any of claims 1-22 wherein the polymer is a monotelechelic polymer.

24. The method of any of claims 1-22 wherein the polymer is a bitelechelic polymer.

25. The method of claim 1 wherein the functionalized capping agent has the formula: 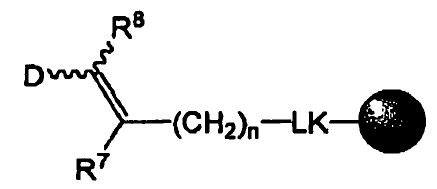 where D is an electron donating group; R⁸ and R⁷, independently, in the capping agent, are hydrogen or an organic group; n is an integer ranging from 1 to about 20; and LK is a linking group that is an organic group having functionality that allows attachment to a solid support illustrated as a sphere.

26. A functionalized capping agent having the formula: 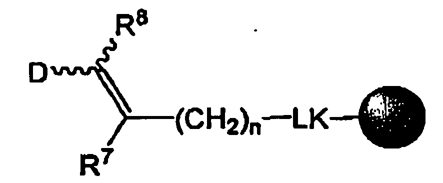 where D is an electron donating group; R⁸ and R⁷, independently, are hydrogen or an organic group; n is an integer ranging from 1 to about 20; and LK is a linking group that is an organic group having functionality that allows attachment to a solid support illustrated as a sphere.

27. The capping agent of claim 26 wherein LK has the formula: -(M)ₙ)-LKₗ-(N)ₚ-LK₂, where M and N are the same or different organic groups; m and p are integers ranging from 0 to about 20 and LK₁ and LK₂ are functional groups.

28. The capping agent of any of claims 26 and 27 wherein LK comprises a cleavable functional group.

29. The capping agent of claim 26 wherein D is SR⁹, OR⁹ or a halogen, where R⁹ is hydrogen or an organic group.

30. The capping agent of claim 26 having formula: 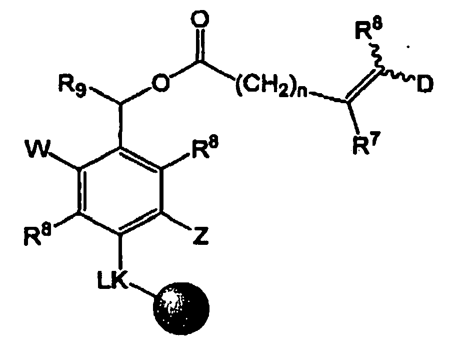 where D is an electron donating group; R⁸, independent of other R⁸ in the capping agent, is hydrogen or an organic group; R⁷ is a hydrogen or an organic group; n is an is an integer ranging from 1 to about 20, R₉ is H or an organic group; W is an electron withdrawing group and Z is an electron donating group and LK is a linking group that is an organic group having functionality that allows attachment to a solid support illustrated as a sphere.

31. A method for generating a library comprising a plurality of multivalent arrays which comprises the steps of:
(a) synthesizing each multivalent array by the method of any of claims 1-25 and
(b) combining the multivalent arrays to generate a library.

## Patentansprüche

1. Verfahren zur Herstellung eines telechelen Polymers, bei dem man:
mindestens ein Monomer mit mindestens einer polymerisierbaren Gruppe, das durch Ringöffnungsmetathese-Polymerisation polymerisiert wird, in Gegenwart mindestens eines Ruthenium- oder Osmiumcarbenkatalysators zu einem Polymer polymerisiert und
das Polymer mit mindestens einem funktionalisierten Endgruppenverschlußmittel, das bifunktionell ist, vereinigt, wobei das Endgruppenverschlußmittel eine elektronenschiebende Gruppe und mindestens eine latent reaktive Gruppe oder eine nichtreaktive funktionelle Gruppe aufweist, und zwar unter Bedingungen, unter denen das Polymer mit dem Endgruppenverschlußmittel zu einem telechelen Polymer reagiert.

2. Verfahren nach Anspruch 1, bei dem das funktionalisierte Endgruppenverschlußmittel die Formel: 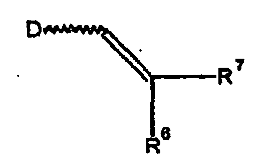 worin D für die elektronenschiebende Gruppe steht und R⁶ und R⁷ jeweils unabhängig voneinander für H oder eine organische Gruppe stehen und mindestens eine der Gruppen R⁶ und R⁷ eine latent reaktive Gruppe oder eine nichtreaktive funktionelle Gruppe umfaßt, aufweist.

3. Verfahren nach Anspruch 1 oder Anspruch 2, bei dem das funktionalisierte Endgruppenverschlußmittel eine latent reaktive Gruppe zur nachfolgenden Reaktion mit einem Funktionalisierungsmittel umfaßt.

4. Verfahren nach Anspruch 2, bei dem R⁶ für eine organische Gruppe steht, die eine unter einem Azid, einer Nitrogruppe, einem Disulfid, einem Hydrazin, einem Hydrazid, einem Hydroxylamin, einem Aldehyd, einem Keton, einem Epoxid, einer Cyanogruppe, einem Acetal, einem Ketal, einem Carbamat, einem Thiocyanat, einem aktivierten Ester und einer aktivierten Säure ausgewählte latent reaktive Gruppe umfaßt.

5. Verfahren nach Anspruch 1 oder Anspruch 2, bei dem das funktionalisierte Endgruppenverschlußmittel eine nichtreaktive funktionelle Gruppe umfaßt.

6. Verfahren nach Anspruch 2, bei dem R⁶ für eine organische Gruppe steht, die eine unter Naturprodukten oder Analogen davon, Metallchelatbildnern, Metallen, Fluoreszenzsonden, festen Trägern und Metalloberflächen ausgewählte nichtreaktive funktionelle Gruppe umfaßt.

7. Verfahren nach Anspruch 1, bei dem das funktionalisierte Endgruppenverschlußmittel ferner einen spaltbaren Linker umfaßt.

8. Verfahren nach Anspruch 7, bei dem das Endgruppenverschlußmittel eine nichtreaktive funktionelle Gruppe umfaßt.

9. Verfahren nach Anspruch 8, bei dem es sich bei der nichtreaktiven funktionellen Gruppe um einen festen Träger handelt.

10. Verfahren nach Anspruch 9, bei dem das funktionalisierte Endgruppenverschlußmittel die Formel: 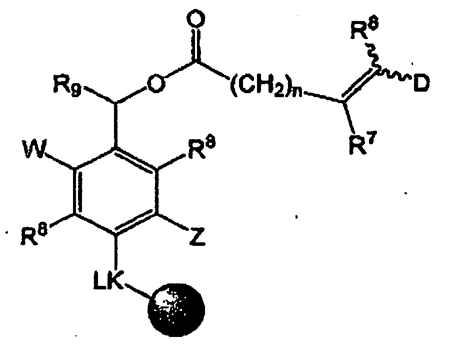 worin D für eine elektronenschiebende Gruppe steht; R⁸ unabhängig von anderen Gruppen R⁸ in dem funktionalisierten Endgruppenverschlußmittel für Wasserstoff oder eine organische Gruppe steht; n für eine ganze Zahl im Bereich von 1 bis etwa 20 steht; R⁹ für Wasserstoff oder eine organische Gruppe steht; W für eine elektronenziehende Gruppe steht und Z für eine elektronenschiebende Gruppe steht und LK für eine Linkergruppe zur Anbindung an den festen Träger, der durch die Kugel gezeigt ist, steht und die gestrichelte Linie eine Bindung zeigt, an der photochemische Spaltung erfolgen kann, aufweist.

11. Verfahren nach Anspruch 10, bei dem W für eine NO₂-Gruppe steht und Z für eine OR-Gruppe steht, wobei R für eine Alkylgruppe steht.

12. Verfahren nach einem der Ansprüche 1-11, bei dem der Ruthenium- oder Osmiumcarbenkatalysator funktionalisiert ist.

13. Verfahren nach Anspruch 12, bei dem der funktionalisierte Carbenkatalysator eine latent reaktive Gruppe zur nachfolgenden Reaktion mit einem Funktionalisierungsmittel umfaßt.

14. Verfahren nach Anspruch 13, bei dem das funktionalisierte Carben durch M=CR⁴R⁵, worin R⁴ für eine organische Gruppe mit einer latent reaktiven Gruppe steht, R⁵ für H oder eine organische Gruppe steht und M für Ruthenium oder Osmium in einer Ligandensphäre steht, wiedergegeben wird.

15. Verfahren nach Anspruch 14, bei dem R⁴ für eine organische Gruppe mit einer aus der Gruppe eines Azids, eines Epoxids, einer Cyanogruppe, eines Acetals, eines Ketals, eines Carbamats, eines Thiocyanats, eines aktivierten Esters, einer aktivierten Säure, eines Hydrazins und eines Hydrazons ausgewählten latent reaktiven Gruppe steht.

16. Verfahren nach Anspruch 12, bei dem das funktionalisierte Carben die Formel: 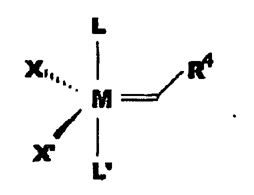 worin M für Ru oder Os steht, X und X' jeweils unabhängig voneinander für einen anionischen Liganden stehen, L und L' jeweils unabhängig voneinander für einen neutralen Liganden stehen und R⁴ für eine organische Gruppe mit einer aus der Gruppe eines Azids, eines Epoxids, einer Cyanogruppe, eines Acetals, eines Ketals, eines Carbamats, eines Thiocyanats, eines aktivierten Esters, einer aktivierten Säure, eines Hydrazins und eines Hydrazons ausgewählten latent reaktiven Gruppe steht, aufweist.

17. Verfahren nach Anspruch 12, bei dem der funktionalisierte Carbenkatalysator eine nichtreaktive funktionelle Gruppe umfaßt.

18. Verfahren nach Anspruch 17, bei dem das funktionalisierte Carben durch M=CR⁴R⁵, worin R⁴ für eine organische Gruppe mit einer nichtreaktiven funktionellen Gruppe steht, R⁵ für H oder eine organische Gruppe steht und M für Ruthenium oder Osmium in einer Ligandensphäre steht, wiedergegeben wird.

19. Verfahren nach Anspruch 18, bei dem R⁴ für eine organische Gruppe steht, die eine unter Naturprodukten oder Analogen davon, Metallchelatbildnern, Metallen, Fluoreszenzsonden, festen Trägern und Metalloberflächen ausgewählte nichtreaktive funktionelle Gruppe umfaßt.

20. Verfahren nach Anspruch 17, bei dem das funktionalisierte Carben die folgende Formel: 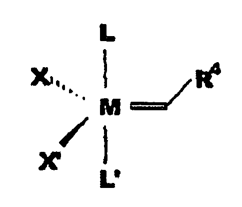 worin M für Ru oder Os steht, X und X' jeweils unabhängig voneinander für einen anionischen Liganden stehen, L und L' jeweils unabhängig voneinander für einen neutralen Liganden stehen und R⁴ für eine organische Gruppe steht, die eine unter Naturprodukten oder Analogen davon, Metallchelatbildnern, Metallen, Fluoreszenzsonden, festen Trägern und Metalloberflächen ausgewählte nichtreaktive funktionelle Gruppe umfaßt, aufweist.

21. Verfahren nach Anspruch 17, bei dem es sich bei der nichtreaktiven funktionellen Gruppe um einen festen Träger handelt.

22. Verfahren nach Anspruch 21, bei dem der funktionalisierte Metallcarbenkatalysator die Formel: 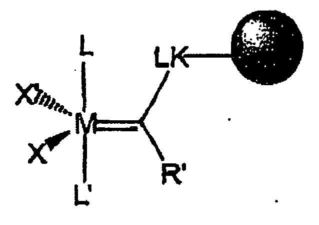 worin M für Ru oder Os steht, X und X' jeweils unabhängig voneinander für einen anionischen Liganden stehen und zusammen einen zweizähnigen Anionliganden bilden können, L und L' jeweils unabhängig voneinander für einen neutralen Liganden stehen und zusammen einen neutralen zweizähnigen Liganden bilden können, R' für Wasserstoff oder eine organische Gruppe steht und LK für eine fakultative Linkergruppe steht, bei der sich um eine organische Gruppe handelt, und der feste Träger als Kugel dargestellt ist, aufweist.

23. Verfahren nach einem der Ansprüche 1-22, bei dem es sich bei dem Polymer um ein monotelecheles Polymer handelt.

24. Verfahren nach einem der Ansprüche 1-22, bei dem es sich bei dem Polymer um ein bitelecheles Polymer handelt.

25. Verfahren nach Anspruch 1, bei dem das funktionalisierte Endgruppenverschlußmittel die Formel: 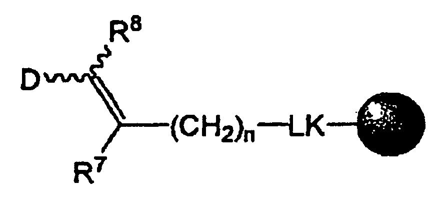 worin D für eine elektronenschiebende Gruppe steht; R⁸ und R⁷ unabhängig voneinander in dem Endgruppenverschlußmittel für Wasserstoff oder eine organische Gruppe stehen; n für eine ganze Zahl im Bereich von 1 bis etwa 20 steht und LK für eine Linkergruppe, bei der es sich um eine organische Gruppe mit einer Funktionalität, die die Anbindung an einen festen Träger, der als Kugel dargestellt ist, ermöglicht, steht, aufweist.

26. Funktionalisiertes Endgruppenverschlußmittel mit der Formel: 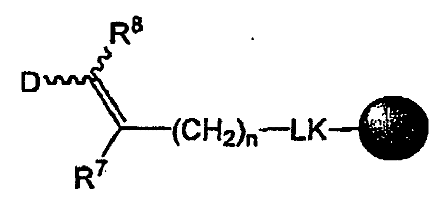 worin D für eine elektronenschiebende Gruppe steht; R⁸ und R⁷ unabhängig voneinander für Wasserstoff oder eine organische Gruppe stehen; n für eine ganze Zahl im Bereich von 1 bis etwa 20 steht und LK für eine Linkergruppe, bei der es sich um eine organische Gruppe mit einer Funktionalität, die die Anbindung an einen festen Träger, der als Kugel dargestellt ist, ermöglicht, handelt, steht.

27. Endgruppenverschlußmittel nach Anspruch 26, wobei LK die Formel : -(M)ₘ-LK₁-(N)ₚ-LK₂ aufweist, wobei M und N für gleiche oder verschiedene organische Gruppen stehen; m und p für ganze Zahlen im Bereich von 0 bis etwa 20 stehen und LK₁ und LK₂ für funktionelle Gruppen stehen.

28. Endgruppenverschlußmittel nach einem der Ansprüche 26 und 27, wobei LK eine spaltbare funktionelle Gruppe umfaßt.

29. Endgruppenverschlußmittel nach Anspruch 26, wobei D für SR⁹, OR⁹ oder ein Halogen steht, wobei R⁹ für Wasserstoff oder eine organische Gruppe steht.

30. Endgruppenverschlußmittel nach Anspruch 26 mit der Formel: 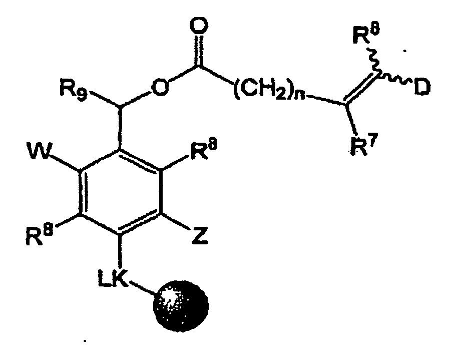 worin D für eine elektronenschiebende Gruppe steht; R⁸ unabhängig von anderen Gruppen R⁸ in dem Endgruppenverschlußmittel für Wasserstoff oder eine organische Gruppe steht; R⁷ für Wasserstoff oder eine organische Gruppe steht; n für eine ganze Zahl im Bereich von 1 bis etwa 20 steht; R₉ für H oder eine organische Gruppe steht; W für eine elektronenziehende Gruppe steht und Z für eine elektronenschiebende Gruppe steht und LK für eine Linkergruppe, bei der es sich um eine organische Gruppe mit einer Funktionalität, die die Anbindung an einen festen Träger, der als Kugel dargestellt ist, ermöglicht, handelt, steht.

31. Verfahren zur Erzeugung einer Bibliothek mit mehreren multivalenten Arrays, bei dem man:
(a) jedes multivalente Array nach dem Verfahren nach einem der Ansprüche 1-25 synthetisiert und
(b) die multivalenten Arrays zu einer Bibliothek kombiniert.

## Revendications

1. Procédé de préparation d'un polymère téléchélique, le procédé comprenant :
la polymérisation d'au moins un monomère comprenant au moins un groupe polymérisable qui est polymérisé par polymérisation par métathèse par ouverture de cycle en présence d'au moins un catalyseur au carbène de ruthénium ou d'osmium pour former un polymère ; et
la combinaison du polymère avec au moins un agent de coiffage fonctionnalisé qui est bifonctionnel, ledit agent de coiffage portant un groupe donneur d'électrons, et un groupe réactif latent et/ou un groupe fonctionnel non réactif, dans des conditions efficaces pour faire réagir le polymère avec l'agent de coiffage afin de former un polymère téléchélique.

2. Procédé selon la revendication 1 dans lequel l'agent de coiffage fonctionnalisé répond à la formule : 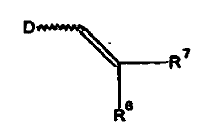 dans laquelle D est le groupe donneur d'électrons, et R⁶ et R⁷ représentent chacun indépendamment H ou un groupe organique, R⁶ et/ou R⁷ comprenant un groupe réactif latent ou un groupe fonctionnel non réactif.

3. Procédé selon la revendication 1 ou la revendication 2 dans lequel l'agent de coiffage fonctionnalisé comprend un groupe réactif latent pour réaction consécutive avec un réactif de fonctionnalisation.

4. Procédé selon la revendication 2 dans lequel R⁶ représente un groupe organique qui comprend un groupe réactif latent choisi parmi un azide, un groupe nitro, un disulfure, une hydrazine, un hydrazide, une hydroxylamine, un aldéhyde, une cétone, un époxyde, un groupe cyano, un acétal, un cétal, un carbamate, un thiocyanate, un ester activé, et un acide activé.

5. Procédé selon la revendication 1 ou la revendication 2 dans lequel l'agent de coiffage fonctionnalisé comprend un groupe fonctionnel non réactif.

6. Procédé selon la revendication 2 dans lequel R⁶ représente un groupe organique qui comprend un groupe fonctionnel non réactif choisi parmi les produits naturels ou leurs analogues, les chélateurs de métaux, les métaux, les sondes fluorescentes, les supports solides, et les surfaces métalliques.

7. Procédé selon la revendication 1 dans lequel l'agent de coiffage fonctionnalisé comprend en outre un agent de liaison clivable.

8. Procédé selon la revendication 7 dans lequel l'agent de coiffage comprend un groupe fonctionnel non réactif.

9. Procédé selon la revendication 8 dans lequel le groupe fonctionnel non réactif est un support solide.

10. Procédé selon la revendication 9 dans lequel l'agent de coiffage fonctionnalisé répond à la formule : 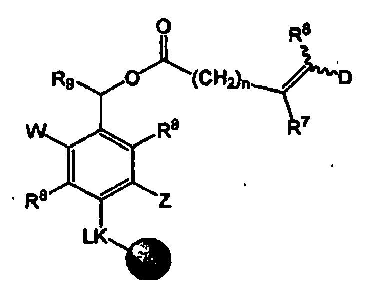 dans laquelle D est un groupe donneur d'électrons ; R⁸, indépendamment des autres R⁸ dans l'agent de coiffage fonctionnalisé, représente un hydrogène ou un groupe organique ; n est un entier allant de 1 à environ 20 ; R⁹ représente un hydrogène ou un groupe organique ; W est un groupe accepteur d'électrons et Z est un groupe donneur d'électrons ; LK est un groupe de liaison pour fixation au support solide qui est indiqué par la sphère ; et la ligne en tirets indique une liaison où peut se produire un clivage photochimique.

11. Procédé selon la revendication 10 dans lequel W est un groupe NO₂ et Z est un groupe OR où R représente une fraction alkyle.

12. Procédé selon l'une quelconque des revendications 1 à 11 dans lequel le catalyseur au carbène de ruthénium ou d'osmium est fonctionnalisé.

13. Procédé selon la revendication 12 dans lequel le catalyseur au carbène fonctionnalisé comprend un groupe réactif latent pour réaction consécutive avec un réactif de fonctionnalisation.

14. Procédé selon la revendication 13 dans lequel le carbène fonctionnalisé est représenté par M=CR⁴R⁵ où R⁴ représente un groupe organique qui comprend un groupe réactif latent, R⁵ représente H ou un groupe organique, et M représente du ruthénium ou de l'osmium dans une sphère de ligands.

15. Procédé selon la revendication 14 dans lequel R⁴ représente un groupe organique qui comprend un groupe réactif latent choisi dans le groupe constitué par un azide, un époxyde, un groupe cyano, un acétal, un cétal, un carbamate, un thiocyanate, un ester activé, un acide activé, une hydrazine, et une hydrazone.

16. Procédé selon la revendication 12 dans lequel le carbène fonctionnalisé répond à la formule : 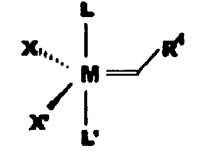 dans laquelle M est Ru ou Os, X et X' sont chacun indépendamment un ligand anionique, L et L' sont chacun indépendamment un ligand neutre, et R⁴ représente un groupe organique qui comprend un groupe réactif latent choisi dans le groupe constitué par un azide, un époxyde, un groupe cyano, un acétal, un cétal, un carbamate, un thiocyanate, un ester activé, un acide activé, une hydrazine, et une hydrazone.

17. Procédé selon la revendication 12 dans lequel le catalyseur au carbène fonctionnalisé comprend un groupe fonctionnel non réactif.

18. Procédé selon la revendication 17 dans lequel le carbène fonctionnalisé est représenté par M=CR⁴R⁵ où R⁴ représente un groupe organique qui comprend un groupe fonctionnel non réactif, R⁵ représente H ou un groupe organique, et M représente du ruthénium ou de l'osmium dans une sphère de ligands.

19. Procédé selon la revendication 18 dans lequel R⁴ représente un groupe organique qui comprend un groupe fonctionnel non réactif choisi parmi les produits naturels ou leurs analogues, les chélateurs de métaux, les métaux, les sondes fluorescentes, les supports solides, et les surfaces métalliques.

20. Procédé selon la revendication 17 dans lequel le carbène fonctionnalisé répond à la formule suivante : 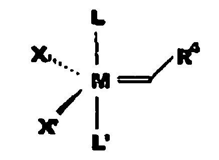 dans laquelle M est Ru ou Os, X et X' sont indépendamment un ligand anionique, L et L' sont indépendamment un ligand neutre, et R⁴ représente un groupe organique qui comprend un groupe fonctionnel non réactif choisi parmi les produits naturels ou leurs analogues, les chélateurs de métaux, les métaux, les sondes fluorescentes, les supports solides, et les surfaces métalliques.

21. Procédé selon la revendication 17 dans lequel le groupe fonctionnel non réactif est un support solide.

22. Procédé selon la revendication 21 dans lequel le catalyseur au carbène métallique fonctionnalisé répond à la formule : 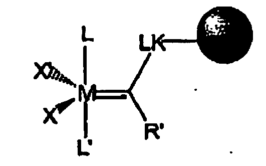 dans laquelle M est Ru ou Os, X et X' sont indépendamment un ligand anionique et peuvent former conjointement un ligand anionique bidenté, L et L' sont indépendamment un ligand neutre et peuvent former conjointement un ligand neutre bidenté, R' représente un hydrogène ou un groupe organique, LK représente un groupe de liaison facultatif qui est un groupe organique, et le support solide est illustré comme une sphère.

23. Procédé selon l'une quelconque des revendications 1 à 22 dans lequel le polymère est un polymère monotéléchélique.

24. Procédé selon l'une quelconque des revendications 1 à 22 dans lequel le polymère est un polymère bitéléchélique.

25. Procédé selon la revendication 1 dans lequel l'agent de coiffage fonctionnalisé répond à la formule : 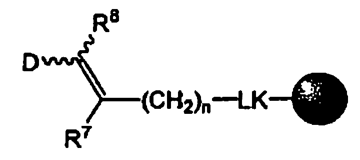 où D est un groupe donneur d'électrons ; R⁸ et R⁷, indépendamment dans l'agent de coiffage, représentent un hydrogène ou un groupe organique ; n est un entier allant de 1 à environ 20 ; et LK représente un groupe de liaison qui est un groupe organique comportant une fonctionnalité qui permet la fixation à un support solide illustré comme une sphère.

26. Agent de coiffage fonctionnalisé répondant à la formule : 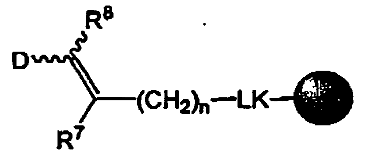 où D est un groupe donneur d'électrons ; R⁸ et R⁷ représentent indépendamment un hydrogène ou un groupe organique ; n est un entier allant de 1 à environ 20 ; et LK représente un groupe de liaison qui est un groupe organique comportant une fonctionnalité qui permet la fixation à un support solide illustré comme une sphère.

27. Agent de coiffage selon la revendication 26 dans lequel LK répond à la formule -(M)ₘ-LK₁-(N)ₚ-LK₂ où M et N sont des groupes organiques identiques ou différents ; m et p sont des entiers allant de 0 à environ 20 ; et LK₁ et LK₂ sont des groupes fonctionnels.

28. Agent de coiffage selon l'une quelconque des revendications 26 et 27 dans lequel LK comprend un groupe fonctionnel clivable.

29. Agent de coiffage selon la revendication 26 dans lequel D est SR⁹, OR⁹ ou un halogène, où R⁹ représente un hydrogène ou un groupe organique.

30. Agent de coiffage selon la revendication 26 répondant à la formule : 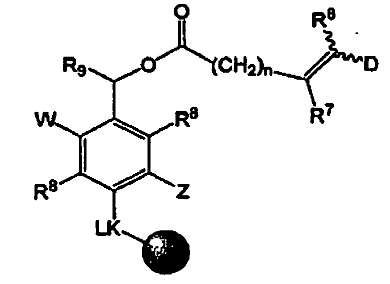 où D est un groupe donneur d'électrons ; R⁸, indépendamment des autres R⁸ dans l'agent de coiffage, représente un hydrogène ou un groupe organique ; R⁷ représente un hydrogène ou un groupe organique ; n est un entier allant de 1 à environ 20 ; R₉ représente H ou un groupe organique ; W est un groupe accepteur d'électrons et Z est un groupe donneur d'électrons ; et LK représente un groupe de liaison qui est un groupe organique comportant une fonctionnalité qui permet la fixation à un support solide illustré comme une sphère.

31. Procédé pour générer une bibliothèque comprenant une pluralité de réseaux polyvalents qui comprend les étapes consistant à :
(a) synthétiser chaque réseau polyvalent par le procédé selon l'une quelconque des revendications 1 à 25 ; et
(b) combiner les réseaux polyvalents pour générer une bibliothèque.
